# EUROPEAN PATENT APPLICATION

(11) **EP 4 832 488 A1**
(43) Date of publication of application: **28.10.2026**
(21) Application number: 24906221.7
(22) Date of filing: 12.12.2024
(51) Int. Cl.: H04N 19/42

(54) **IMAGE BLOCK COMPRESSION PROCESSING METHOD AND APPARATUS, AND ELECTRONIC DEVICE**

(30) Priority: 19.12.2023 CN 202311752618
(71) Applicant: Vivo Mobile Communication Co., Ltd., Dongguan, Guangdong 523863 (CN)
(72) Inventor: ZHOU, Chuan, Dongguan, Guangdong 523863 (CN); LV, Zhuoyi, Dongguan, Guangdong 523863 (CN)
(74) Representative: Conti, Marco
(86) International application number: PCT/CN2024/138698
(87) International publication number: WO 2025/130738

(57) **Abstract**

This application discloses an image block compression processing method and apparatus, and an electronic device, and belongs to the field of video processing technologies. The method in embodiments of this application includes: obtaining first luma data and first chroma data of an image block; inputting the first luma data and the first chroma data into different convolutional layers of a neural network model to perform video compression processing, respectively; and obtaining second luma data and second chroma data that are output by the neural network model.

## Description

### CROSS-REFERENCE TO RELATED APPLICATIONS

This application claims priority to Chinese Patent Application No. 202311752618.9, filed in China on December 19, 2023, which is incorporated herein by reference in its entirety.

### TECHNICAL FIELD

This application belongs to the field of video processing technologies, and specifically relates to an image block compression processing method and apparatus, and an electronic device.

### BACKGROUND

In a unified neural network model, luma data and chroma data need to be bound together before being input into the same convolutional layer of a neural network. Because input data of the same convolutional layer needs to have the same width and height, the chroma data needs to be upsampled in the following case: a chroma subsampling format is used for the luma data and the chroma data, and the width and the height of the chroma data are unequal to those of the luma data. This manner may lead to increased computational complexity of the neural network. In addition, binding the luma data and the chroma data together for inputting into the same convolutional layer of the neural network causes the luma data and the chroma data to have the same parameter count on the convolutional layer, and consequently, results in a relatively large parameter count of the neural network.

### SUMMARY

Embodiments of this application provide an image block compression processing method and apparatus, and an electronic device, to reduce computational complexity and a parameter count of a neural network.

According to a first aspect, an image block compression processing method is provided. The method includes:
obtaining first luma data and first chroma data of an image block;
inputting the first luma data and the first chroma data into different convolutional layers of a neural network model, respectively, to perform video compression processing; and
obtaining second luma data and second chroma data that are output by the neural network model.

According to a second aspect, an image block compression processing apparatus is provided. The image block compression processing apparatus includes:
a first obtaining module, configured to obtain first luma data and first chroma data of an image block;
a processing module, configured to input the first luma data and the first chroma data into different convolutional layers of a neural network model, respectively, to perform video compression processing; and
a second obtaining module, configured to obtain second luma data and second chroma data that are output by the neural network model.

According to a third aspect, an electronic device is provided. The electronic device includes a processor and a memory. The memory stores a program or instructions capable of running on the processor, and when the program or the instructions are executed by the processor, the steps of the method according to the first aspect are implemented.

According to a fourth aspect, an electronic device is provided. The electronic device includes a processor and a communication interface. The processor is configured to: obtain first luma data and first chroma data of an image block;
input the first luma data and the first chroma data into different convolutional layers of a neural network model, respectively, to perform video compression processing; and
obtain second luma data and second chroma data that are output by the neural network model.

According to a fifth aspect, an encoding and decoding system is provided. The encoding and decoding system includes an image block compression processing apparatus. The image block compression processing apparatus may be configured to perform the steps of the method according to the first aspect.

According to a sixth aspect, a readable storage medium is provided. The readable storage medium stores a program or instructions, and when the program or the instructions are executed by a processor, the steps of the method according to the first aspect are implemented.

According to a seventh aspect, a chip is provided. The chip includes a processor and a communication interface. The communication interface is coupled to the processor, and the processor is configured to run a program or instructions to implement the steps of the method according to the first aspect.

According to an eighth aspect, a computer program/program product is provided. The computer program/program product is stored in a storage medium, and the computer program/program product is executed by at least one processor to implement the steps of the method according to the first aspect.

In embodiments of this application, the first luma data and the first chroma data of the image block are separately obtained, and then the first luma data and the first chroma data are input into different convolutional layers of the neural network model, respectively, to perform video compression processing, so as to obtain the second luma data and the second chroma data that are output by the neural network model. In embodiments of this application, during data inputting, luma data and chroma data are separated, and are input into different convolutional layers of the neural network model, respectively. During processing, each convolutional layer processes only data received by the convolutional layer, to reduce an amount of input data of the convolutional layer, thereby reducing data processing complexity of the convolutional layer. In this way, computational complexity and a parameter count of a neural network are reduced.

### BRIEF DESCRIPTION OF DRAWINGS

FIG. 1 is a schematic diagram of an encoding and decoding system according to an embodiment of this application;
FIG. 2 is a schematic structural diagram of an encoder according to an embodiment of this application;
FIG. 3 is a schematic structural diagram of a decoder according to an embodiment of this application;
FIG. 4 is a schematic flowchart of an image block compression processing method according to an embodiment of this application;
FIG. 5 is a schematic diagram of a video compression process in an application case 1;
FIG. 6 is a schematic diagram of a residual processing process;
FIG. 7 is a schematic diagram of a video compression process in an application case 2;
FIG. 8 is a schematic diagram of a video compression process in an application case 3;
FIG. 9 is a schematic diagram of a video compression process in an application case 4;
FIG. 10 is a schematic diagram of a video compression process in an application case 5;
FIG. 11 is a schematic diagram of a video compression process in an application case 6;
FIG. 12 is a schematic diagram of modules of an image block compression processing apparatus according to an embodiment of this application;
FIG. 13 is a schematic structural diagram of an electronic device according to an embodiment of this application; and
FIG. 14 is a schematic structural diagram of a communication device according to an embodiment of this application.

### DESCRIPTION OF EMBODIMENTS

The following clearly describes technical solutions in embodiments of this application with reference to accompanying drawings in embodiments of this application. Clearly, the described embodiments are merely some rather than all of embodiments of this application. All other embodiments obtained by a person of ordinary skill in the art based on embodiments of this application shall fall within the protection scope of this application.

The terms "first", "second", and the like in this application are used to distinguish between similar objects instead of describing a specified order or sequence. It should be understood that terms used in this way are interchangeable under appropriate circumstances, so that embodiments of this application can be implemented in an order other than that illustrated or described herein. Moreover, the terms "first" and "second" typically distinguish between objects of one category rather than limiting a quantity of objects. For example, there may be one or more first objects. In addition, "or" in this application represents at least one of connected objects. For example, "A or B" includes three solutions, that is, a solution 1: including A and not including B; a solution 2: including B and not including A; and a solution 3: including both A and B. The character "/" generally represents an "or" relationship between associated objects.

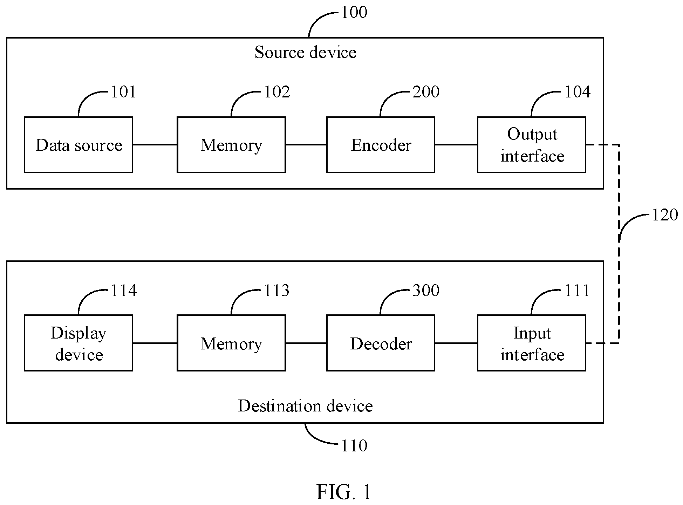

FIG. 1 is a schematic diagram of an encoding and decoding system according to an embodiment of this application. Technical solutions in embodiments of this application relate to encoding and decoding (CODEC) (including encoding or decoding) video data. The video data includes an original unencoded video, an encoded video, a decoded (for example, reconstructed) video, a syntax element, or the like.

As shown in FIG. 1, the encoding and decoding system includes a source device 100, and the source device 100 provides encoded video data to be decoded and displayed by a destination device 110. Specifically, the source device 100 provides the video data to the destination device 110 via a communication medium 120. The source device 100 and the destination device 110 may include any one or more of a desktop computer, a notebook (for example, a laptop) computer, a tablet computer, a set-top box, a mobile phone, a wearable device (for example, a smartwatch or a wearable camera), a television, a camera, a display device, a vehicle-mounted device, a virtual reality (virtual reality, VR) device, an augmented reality (Augmented reality, AR) device, a mixed reality (mixed reality, MR) device, a digital media player, a video game console, a video conference device, a video streaming device, a broadcast receiver device, a broadcast transmitter device, a spacecraft, a plane, a robot, a satellite, and the like.

In an example of FIG. 1, the source device 100 includes a data source 101, a memory 102, an encoder 200, and an output interface 104. The destination device 110 includes an input interface 111, a decoder 300, a memory 113, and a display device 114. The source device 100 represents an example of a video coding device, and the destination device 110 represents an example of a video decoding device. In another example, the source device 100 and the destination device 110 may not include some components in FIG. 1, or may include other components not shown in FIG. 1. For example, the source device 100 may receive video data from an external data source (such as an external camera). Similarly, the destination device 110 may be connected to an external display device via an interface, and does not include an integrated display device. For another example, the memory 102 and the memory 113 may be external memories.

Although FIG. 1 depicts the source device 100 and the destination device 110 as separate devices, in some examples, the source device 100 and the destination device 110 may alternatively be integrated into one device. In such embodiments, a function corresponding to the source device 100 and a function corresponding to the destination device 110 may be implemented by using same hardware or software, or by using separate hardware or software, or any combination thereof.

In some examples, the source device 100 and the destination device 110 may perform unidirectional video transmission or bidirectional video transmission. In a case of bidirectional video transmission, the source device 100 and the destination device 110 may operate in a substantially symmetrical manner, that is, each of the source device 100 and the destination device 110 includes an encoder and a decoder.

The data source 101 represents a source (namely, original unencoded video data) of the video data and provides successive pictures including the video data to the encoder 200, and the encoder 200 encodes the data of the pictures. The data source 101 of the source device 100 may include a video collection device (such as a video camera), a video archive including a previously collected original video, or a video feed interface (feed interface) for receiving a video from a video content provider. Alternatively, the data source 101 may generate computer graphics-based data as a source video, or combine a real-time video, an archived video, and a computer-generated video. In these cases, the encoder 200 encodes collected, pre-collected, or computer-generated video data. The encoder 200 may rearrange the pictures from a receiving order (sometimes referred to as "a display order") into an encoding order. The encoder 200 may generate a bitstream including the encoded video data. The source device 100 may then output the encoded video data to the communication medium 120 via the output interface 104 for reception or retrieval by, for example, the input interface 111 of the destination device 110.

The memory 102 of the source device 100 and the memory 113 of the destination device 110 represent general-purpose memories. In some examples, the memory 102 may store original video data from the data source 101, and the memory 113 may store decoded video data from the decoder 300. Additionally or alternatively, the memories 102 and 113 may store software instructions that can be executed by, for example, the encoder 200 and the decoder 300, respectively. Although the memory 102 and the memory 113 are shown separately from the encoder 200 and the decoder 300 in this example, it should be understood that the encoder 200 and the decoder 300 may further include internal memories for functionally similar or equivalent purposes. If the encoder 200 and the decoder 300 are deployed on a same hardware device, the memory 102 and the memory 113 may be a same memory. In addition, the memories 102 and 113 may store, for example, encoded video data output from the encoder 200 and input into the decoder 300. In some examples, portions of the memories 102 and 113 may be assigned to one or more video buffers, for example, for storing original decoded or encoded video data.

In some examples, the source device 100 may output encoded data from the output interface 104 to the memory 113. Similarly, the destination device 110 may access the encoded data from the memory 113 via the input interface 111. The memory 113 or the memory 102 may include any one of various distributed or locally accessed data storage media, such as a hard drive, a Blu-ray disc, a digital versatile disc (Digital Versatile Disc, DVD), a compact disc read-only memory (Compact Disc Read-Only Memory, CD-ROM), a flash memory, a volatile or non-volatile memory, or any other suitable digital storage medium for storing encoded video data.

The output interface 104 may include any type of medium or device capable of sending encoded video data from the source device 100 to the destination device 110. For example, the output interface 104 may include a transmitter or transceiver, such as an antenna, configured to send encoded video data directly in real time from the source device 100 to the destination device 110. The encoded video data may be modulated according to a communication standard of a wireless communication protocol and sent to the destination device 110.

The communication medium 120 may include an instantaneous medium, such as wireless broadcast or wired network transmission. For example, the communication medium 120 may include a radio frequency (radio frequency, RF) spectrum or one or more physical transmission lines (for example, cables). The communication medium 120 may form a part of a packet-based network (such as a local area network, a wide area network, or a global network such as the Internet). The communication medium 120 may alternatively be in a form of a storage medium (for example, a non-transitory storage medium), such as a hard disk, a flash drive, a compact disc, a digital video disc, a Blu-ray disc, a volatile or non-volatile memory, or any other suitable digital storage medium for storing encoded video data.

In some implementations, the communication medium 120 may include a router, a switch, a base station, or any other device that may be configured to facilitate communication from the source device 100 to the destination device 110. For example, a server (not shown) may receive an encoded video from the source device 100, and provide the encoded video data to the destination device 110, for example, provide the encoded video data to the destination device 110 via network transmission. The server may include a web server (for example, for a website), a server configured to provide a file transfer protocol service (such as a file transfer protocol (File Transfer Protocol, FTP) or a file delivery over unidirectional transport (File Delivery Over Unidirectional Transport, FLUTE) protocol), a content delivery network (content delivery network, CDN) device, a hypertext transfer protocol (Hypertext Transfer Protocol, HTTP) server, a multimedia broadcast multicast service (Multimedia Broadcast Multicast Services, MBMS) or evolved multimedia broadcast multicast service (evolved Multimedia Broadcast Multicast Service, eMBMS) server, a network-attached storage (Network-attached storage, NAS) device, or the like. The server may implement one or more HTTP streaming protocols, such as an MPEG media transport (MPEG Media Transport, MMT) protocol, a dynamic adaptive streaming over HTTP (Dynamic Adaptive Streaming over HTTP, DASH) protocol, an HTTP live streaming (HTTP Live Streaming, HLS) protocol, or a real time streaming protocol (Real Time Streaming Protocol, RTSP).

The destination device 110 may access encoded video data from the server, for example, via a wireless channel (for example, a Wi-Fi connection) or a wired connection (for example, a digital subscriber line (Digital subscriber line, DSL), and a cable modem) for accessing encoded video data stored on the server.

The output interface 104 and the input interface 111 may represent wireless transmitters/receivers, modems, wired networking components (for example, Ethernet network cards), wireless communication components operated according to the IEEE 802.11 or IEEE 802.15 standard (for example, ZigBeeTM) or the Bluetooth standard, or other physical components. In an example in which the output interface 104 and the input interface 111 include wireless components, the output interface 104 and the input interface 111 may be configured to transfer data such as encoded video data according to WIFI, Ethernet, or a cellular network (such as 4G, long term evolution (Long Term Evolution, LTE), advanced LTE, fifth generation mobile communication technology (Fifth Generation Mobile Communication Technology, 5G), or sixth generation mobile communication technology (Sixth Generation Mobile Communication Technology, 6G)).

The technology provided in this embodiment of this application may be applied to video coding and decoding supporting one or more of the following multimedia applications: video conferencing, over-the-air television broadcast, cable television transmission, satellite television transmission, Internet streaming video transmission, a digital video encoded on a data storage medium, decoding of a digital video stored on a data storage medium, or another application.

The input interface 111 of the destination device 110 receives the encoded video bitstream (bitstream) from the communication medium 120. The encoded video bitstream may include a syntax element and an encoded data unit (for example, a sequence, a picture group, a picture, a slice, or a block), where the syntax element is used to decode the encoded data unit to obtain decoded video data. The display device 114 displays the decoded video data to a user. The display device 114 may include a cathode ray tube (Cathode ray tube, CRT), a liquid-crystal display (liquid-crystal display, LCD), a plasma display, an organic light-emitting diode (organic light-emitting diode, OLED) display, or another type of display device.

The encoder 200 and the decoder 300 may be implemented as one or more of various processing circuits, and the processing circuit may include a microprocessor, a digital signal processor (Digital Signal Processors, DSP), an application specific integrated circuit (Application Specific Integrated Circuit, ASIC), a field programmable gate array (Field Programmable Gate Arrays, FPGA), discrete logic, hardware, or any combination thereof. When the technology is implemented in software in whole or in part, the device may store the instruction used in the software in an appropriate non-transitory computer readable storage medium, and use one or more processors to execute the instruction in hardware to execute the technology provided in embodiments of this application.

The encoder 200 and the decoder 300 may perform processing based on the following video coding and decoding standards: H.263, H.264, H.265 (also referred to as high efficiency video coding (High Efficiency Video Coding, HEVC)), H.266 (also referred to as versatile video coding (Versatile Video Coding, VVC)), moving picture experts group 2 (Moving Picture Experts Group 2, MPEG-2), MPEG-4, video compression format version 8 (Video Compression Format Version 8, VP8), VP9, alliance for open media video 1 (Alliance for Open Media Video 1, AV1), audio video coding standard 1 (Audio Video coding Standard 1, AVS1), AVS2, AVS3, or a next-generation video standard protocol. This is not specifically limited in this embodiment of this application.

Generally, the encoder 200 and the decoder 300 may perform block-based encoding and decoding of pictures. The term "block" generally refers to a structure that includes data to be processed (for example, encoded, decoded, or used in another manner during encoding or decoding). For example, a block may include a two-dimensional matrix of samples of luma or chroma data. For example, the encoder 200 and the decoder 300 may encode and decode video data represented in a YUV format.

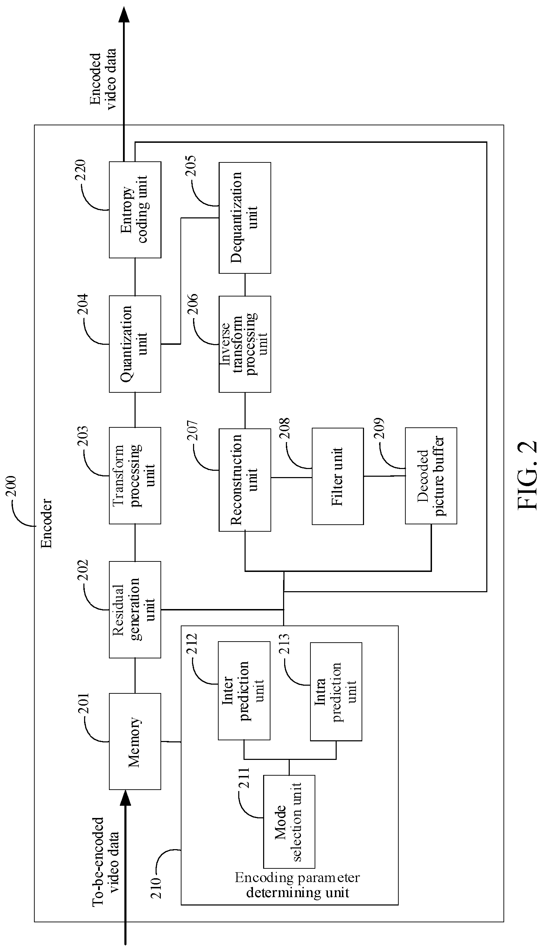

Referring to FIG. 2, FIG. 2 is a schematic structural diagram of an encoder 200 according to an embodiment of this application. The encoder 200 may be the encoder 200 in FIG. 1. In an example of FIG. 2, the encoder 200 includes a memory 201, an encoding parameter determining unit 210, a residual generation unit 202, a transform processing unit 203, a quantization unit 204, a dequantization unit 205, an inverse transform processing unit 206, a reconstruction unit 207, a filter unit 208, a decoded picture buffer (decoded picture buffer, DPB) 209, and an entropy coding unit 220.

The memory 201 may store to-be-encoded video data. For example, the encoder 200 may receive video data from the data source 101 shown in FIG. 1, and store the video data. In some examples, the memory 201 may be on a same chip as another component of the encoder 200 (as shown in FIG. 2), or may be independent of a chip on which the components are located.

The encoding parameter determining unit 210 includes a mode selection unit 211, an inter prediction unit 212, and an intra prediction unit 213. The inter prediction unit 212 is configured to obtain a first prediction block of a current block by using an inter prediction mode, the intra prediction unit 213 is configured to obtain a second prediction block of the current block by using an intra prediction mode, and the mode selection unit 211 is configured to obtain a target prediction block based on the first prediction block and the second prediction block, and determine a final prediction mode. In addition, the encoding parameter determining unit 210 may further include another functional unit, for example, a functional unit configured to determine a partitioning manner of a coding unit (coding unit, CU), or a functional unit configured to determine a transform type of residual data of the CU or a quantization parameter of residual data of the CU.

For ease of description and understanding, in this embodiment of this application, a to-be-processed CU in a current image is referred to as a current CU, and a to-be-processed image block in the current CU is referred to as a current block or a to-be-processed image block. For example, during encoding, the to-be-processed image block image is a block currently being encoded, and during decoding, the to-be-processed image block image is a block currently being decoded.

The inter prediction unit 212 may include a motion estimation unit and a motion compensation unit. For inter prediction of the current block, the motion estimation unit may perform motion search to identify one or more matching reference blocks in one or more reference pictures (for example, one or more previously encoded and decoded pictures stored in the DPB 209).

The motion estimation unit may form one or more motion vectors (motion vector, MV) indicating a position of a reference block in the reference picture relative to a position of the current block in a current picture. The motion compensation unit may obtain, through interpolation, a prediction value of precision indicated by a motion vector.

The encoding parameter determining unit 210 may provide the target prediction block to the residual generation unit 202. The residual generation unit 202 receives the original unencoded video data of the current block from the memory 201, and calculates a residual between the current block and the target prediction block to obtain a residual block. In some examples, a function of the residual generation unit 202 may be implemented by using one or more subtractor circuits that perform binary subtraction.

As an example, the encoding parameter determining unit 210 may provide a syntax element representing an encoding parameter to the entropy coding unit 220 for encoding. The encoding parameter includes one or more of the partitioning manner of the CU, the final prediction mode, the transform type of the residual data of the CU, the quantization parameter of the residual data of the CU, or the like.

The transform processing unit 203 performs transform on the residual block output by the residual generation unit 202 to obtain a transform coefficient block, where the transform may include discrete cosine transform (Discrete Cosine Transform, DCT), integer transform, directional transform, Karhunen-Loeve transform, or the like. In some examples, the encoder 200 may not include the transform processing unit 203.

The quantization unit 204 may quantize a transform coefficient in the transform coefficient block based on a quantization parameter (quantization parameter, QP) value associated with the current block, to generate a quantized transform coefficient block.

The dequantization unit 205 and the inverse transform processing unit 206 may respectively perform dequantization and inverse transform on the transform coefficient block to obtain a reconstructed residual block. The reconstruction unit 207 may generate a reconstructed block corresponding to the current block based on the reconstructed residual block and the target prediction block generated by the encoding parameter determining unit 210.

The filter unit 208 may perform one or more filter operations on the reconstructed block. For example, the filter unit 208 may be a deblocking filter (deblocking filter, DBF), an adaptive loop filter (adaptive loop filter, ALF), a sample adaptive offset (sample adaptive offset, SAO) filter, or the like. In some examples, the encoder 200 may not include the filter unit 208.

The encoder 200 stores a reconstructed picture obtained from the reconstructed block in the DPB 209. For example, in an example in which an operation of the filter unit 208 is not required, the reconstruction unit 207 may store the reconstructed block in the DPB 209. In an example in which an operation of the filter unit 208 is required, the filter unit 208 may store a filtered reconstructed block in the DPB 209. The inter prediction unit 212 obtains the reconstructed picture from the DPB 209, so as to perform inter prediction on a block of a subsequent to-be-encoded picture. In some examples, the DPB 209 may be replaced with another type of memory.

The entropy coding unit 220 may perform entropy coding on a syntax element of another component in the encoder 200 to output encoded video data. For example, the entropy coding unit 220 may perform entropy coding on the quantized transform coefficient block from the quantization unit 204. As another example, the entropy coding unit 220 may perform entropy coding on a syntax element (for example, motion information for inter prediction or intra mode information for intra prediction) from the encoding parameter determining unit 210.

It may be understood that the composition of the encoder 200 in FIG. 2 is merely illustrative, and does not constitute a limitation on this embodiment of this application.

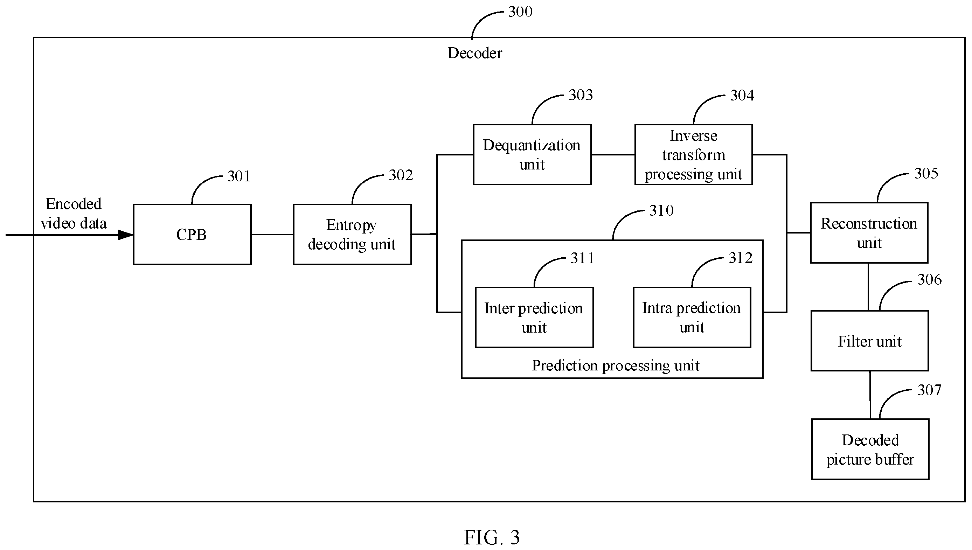

FIG. 3 is a schematic structural diagram of a decoder 300 according to an embodiment of this application. The decoder 300 may be the decoder 300 described in FIG. 1. In an example of FIG. 3, the decoder 300 includes a coded picture buffer (coded picture buffer, CPB) 301, an entropy decoding unit 302, a prediction processing unit 310, a dequantization unit 303, an inverse transform processing unit 304, a reconstruction unit 305, a filter unit 306, and a DPB 307.

The entropy decoding unit 302 may receive encoded video data from the CPB 301 and perform entropy decoding on the video data to obtain a syntax element, where the syntax element indicates an encoding parameter, and the encoding parameter includes one or more of a partitioning manner of a CU, a final prediction mode, a transform type of residual data of the CU, or a quantization parameter of residual data of the CU.

In a case that the syntax element includes the final prediction mode, the prediction processing unit 310 obtains the final prediction mode. If the final prediction mode is an inter prediction mode, a prediction block of a current CU may be obtained by using an inter prediction unit 311 of the prediction processing unit 310. If the final prediction mode is an intra prediction mode, the prediction block of the current CU may be obtained by using an intra prediction unit 312 of the prediction processing unit 310. In some examples, the prediction processing unit 310 may further include a unit configured to perform a prediction function based on another prediction mode.

The CPB 301 may obtain the encoded video data from the communication medium 120 shown in FIG. 1 and store the encoded video data. The DPB 307 is configured to store a decoded picture. Optionally, the CPB 301 and the DPB 307 may be replaced with another type of memory. This is not specifically limited in this application. In some examples, the CPB 301 may be on a same chip as other components of the decoder 300 (as shown in the figure), or may be independent of the chip on which the components are located.

The decoder 300 may perform a reconstruction operation on each block. The entropy decoding unit 302 may perform entropy decoding on a syntax element of a quantized transform coefficient and transform information (for example, a QP or a transform mode indication) to obtain the quantized transform coefficient. The dequantization unit 303 performs dequantization on the quantized transform coefficient to obtain a transform coefficient block that includes the transform coefficient. The inverse transform processing unit 304 performs inverse transform on the transform coefficient block to generate a residual block corresponding to the current block, where the inverse transform is a reverse operation of the foregoing transform.

The reconstruction unit 305 may reconstruct the current block based on the prediction block and the residual block. For example, the reconstruction unit 305 may add a sample of the residual block to a corresponding sample of the prediction block to reconstruct the current block.

The filter unit 306 may perform one or more filter operations on the reconstructed block. For example, for a type of the filter unit 306, reference may be made to a type of the filter unit 208, and details are not described herein again. In some examples, an operation of the filter unit 306 may be skipped.

The decoder 300 may store a reconstructed picture obtained from the reconstructed block in the DPB 307. For example, in an example in which the operation of the filter unit 306 is not performed, the reconstruction unit 305 may store the reconstructed block in the DPB 307. In an example in which the operation of the filter unit 306 is performed, the filter unit 306 may store a filtered reconstructed block in the DPB 307. The decoder 300 may output the decoded picture (for example, a decoded video) from the DPB 307 for subsequent presentation on a display device, such as the display device 114 in FIG. 1.

With reference to the accompanying drawings, the following describes an image block compression processing method and apparatus, and an electronic device that are provided in embodiments of this application. The image block prediction method provided in embodiments of this application may be performed by an encoder side, for example, the encoder 200 shown in FIG. 1 or FIG. 2. The image block prediction method provided in embodiments of this application may be performed by a decoder side, for example, the decoder 300 shown in FIG. 1 or FIG. 3. The encoder side and the decoder side may be implemented by software, hardware, or a combination thereof. When the encoder side and the decoder side are implemented by hardware, the encoder side may be referred to as an encoder device or a video coding device, and the decoder side may be referred to as a decoder device or a video decoding device.

The following first describes the technologies related to embodiments of this application.

### 1. Neural network-based loop filter solution

To reduce impact of distortion artifacts such as a blocking artifact and a ringing artifact on video quality, some loop filters such as a deblocking module and a sample adaptive offset module are introduced in a video compression standard. Deblocking filtering is designed to reduce the blocking artifact, and sample adaptive offset is used to alleviate the ringing artifact. These loop filters effectively improve subjective and objective quality of a video in an encoding and decoding loop.

With widespread application of a neural network-based method in image processing, many neural network-based loop filter solutions have also achieved good performance in video compression. An attempt has been made to completely replace conventional filters with neural network filters, and another attempt has also been made to replace some conventional filters with neural network filters.

However, the neural network filter has problems of high complexity, a large parameter count, and a large amount of computation.

### 2. Neural network-based super-resolution solution

The neural network-based super-resolution solution refers to performing super-resolution reconstruction on an image by using a neural network, to improve clarity and details of the image. In the method, a feature of the image may be learned by training the neural network, so that super-resolution reconstruction of the image can be implemented. A common neural network includes a convolutional neural network, a recurrent neural network, and the like. In the image super-resolution solution, the neural network may be used in aspects such as super-resolution reconstruction of a single image and joint super-resolution reconstruction of a plurality of images. The method has been widely applied to fields of image processing, medical image analysis, and security monitoring, and has been continuously developed and improved.

### 3. Chroma subsampling

The human eye is less sensitive to a chroma signal than a luma signal. A chroma signal in an image may be downsampled, and neighboring pixels may share a same chroma value. Chroma subsampling formats include 4:4:4, 4:2:2, 4:1:1, and 4:2:0.

4:4:4 represents that a horizontal resolution and a vertical resolution of luma are the same as those of chroma. 4:2:2 represents that a horizontal resolution of chroma is 1/2 of that of luma, and a vertical resolution of chroma is equal to that of luma. 4:1:1 represents that a horizontal resolution of chroma is 1/4 of that of luma, and a vertical resolution of chroma is equal to that of luma. 4:2:0 represents that a horizontal resolution and a vertical resolution of chroma are 1/2 of those of luma.

In a unified network model, luma and chroma are bound together as an input to a neural network. Data dimensions related to luma and chroma need to be the same. The following problems occur:
1. For a sampling format of chroma subsampling, chroma needs to be upsampled before chroma can be used as an input to the neural network. Upsampling chroma increases computational complexity of the model.
2. Luma and chroma texture processing differs in difficulty, and the human eye is relatively insensitive to chroma. Binding luma and chroma for inputting increases a parameter count of the model.

With reference to the accompanying drawings, an image block compression processing method and apparatus, and an electronic device that are provided in embodiments of this application are described in detail below by using some embodiments and application scenarios thereof.

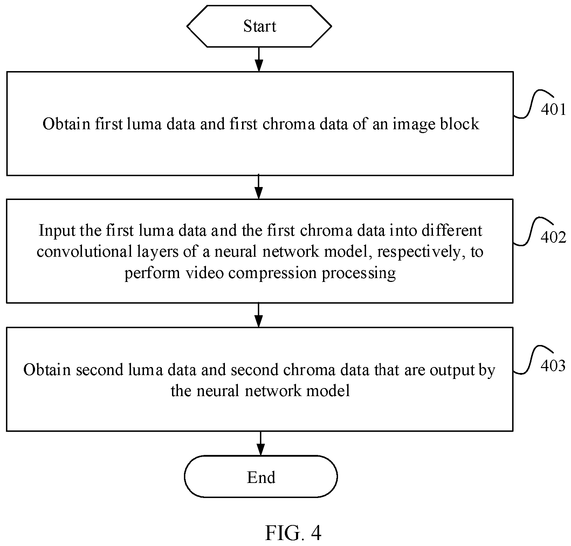

As shown in FIG. 4, an embodiment of this application provides an image block compression processing method, including the following steps.

Step 401: Obtain first luma data and first chroma data of an image block.

Step 402: Input the first luma data and the first chroma data into different convolutional layers of a neural network model, respectively, to perform video compression processing.

Step 403: Obtain second luma data and second chroma data that are output by the neural network model.

It should be noted that generally, during video compression processing, each image frame needs to be partitioned into a plurality of image blocks based on a video image frame, and processing is performed based on each image block. The image block in this embodiment of this application refers to a partial image in the video image frame. Processing is usually performed on each image block, to complete processing on the video image frame, thereby implementing video compression processing.

It should be noted that in this embodiment of this application, the first luma data and the first chroma data of the image block are separately obtained, and then the first luma data and the first chroma data are input into different convolutional layers of the neural network model, respectively, to perform video compression processing, so as to obtain the second luma data and the second chroma data that are output by the neural network model. In this embodiment of this application, during data inputting, luma data and chroma data are separated, and are input into different convolutional layers of the neural network model, respectively. During processing, each convolutional layer processes only data received by the convolutional layer, to reduce an amount of input data of the convolutional layer, thereby reducing data processing complexity of the convolutional layer. In this way, computational complexity and a parameter count of a neural network are reduced.

Optionally, in an implementation, component data in the first luma data includes but is not limited to at least one of the following:
a luma reconstruction block, a luma prediction block, luma boundary strength, a luma residual block, and a luma transform coefficient block.

Optionally, the luma reconstruction block is a reconstructed sample block that is obtained by a decoder through decoding based on a bitstream and that forms a luma signal of a decoded image, and may be a filtered sample or may be an unfiltered sample. The luma prediction block is a predicted sample block that is of the luma signal and that is calculated through a prediction technology by using a reconstructed sample in a decoding process. The luma boundary strength is a boundary strength value that is of the luma signal and that is obtained through a deblocking filtering technology based on mode information and a sample variation on both sides of a boundary. The luma residual block is a block including a difference between an original sample and a predicted sample of an image block of the luma signal. The luma transform coefficient block is a block including a transform coefficient in frequency domain obtained by performing a transform technology on the luma residual block.

Optionally, in an implementation, component data in the first chroma data includes at least one of the following:
blue component data; and
red component data.

Optionally, in an implementation, the blue component data and/or the red component data include/includes but are/is not limited to at least one of the following component type data:
a chroma reconstruction block, a chroma prediction block, chroma boundary strength, a chroma residual block, and a chroma transform coefficient block.

Optionally, the chroma reconstruction block is a reconstructed sample block that is obtained by the decoder through decoding based on a bitstream and that forms a chroma signal of the decoded image, and may be a filtered sample or may be an unfiltered sample. The chroma prediction block is a predicted sample block that is of the chroma signal and that is calculated through a prediction technology by using a reconstructed sample in a decoding process. The chroma boundary strength is a boundary strength value that is of the chroma signal and that is obtained through a deblocking filtering technology based on mode information and a sample variation on both sides of a boundary. The chroma residual block is a block including a difference between an original sample and a predicted sample of an image block of the chroma signal. The chroma transform coefficient block is a block including a transform coefficient in frequency domain obtained by performing a transform technology on the chroma residual block.

Optionally, the second luma data includes a filtered luma reconstruction block or a luma reconstruction block of a first resolution, and the first resolution is greater than a resolution of a luma reconstruction block corresponding to the first luma data; or
the second chroma data includes a filtered chroma reconstruction block or a chroma reconstruction block of a second resolution, and the second resolution is greater than a resolution of a chroma reconstruction block corresponding to the first chroma data.

It should be noted that video compression processing may be performed by using a neural network-based loop filter solution, or video compression processing may be performed by using a neural network-based super-resolution solution. Optionally, when filtering processing is performed by using the neural network model to implement video compression, the obtained second luma data includes the filtered luma reconstruction block, and the obtained second chroma data includes the filtered chroma reconstruction block. Optionally, when super-resolution processing is performed by using the neural network model to implement video compression, the obtained second luma data includes the luma reconstruction block of the first resolution, and the obtained second chroma data includes the chroma reconstruction block of the second resolution.

It should be noted that, to implement processing of the first luma data and the second chroma data by the convolutional layers, strides of the convolutional layers need to be first obtained before the first luma data and the second chroma data are input into the convolutional layers. Optionally, in an implementation, before step 402, the method further includes:
determining, based on a target chroma subsampling format of the image block, strides of the convolutional layers respectively corresponding to the first luma data and the second chroma data, where
the target chroma subsampling format is a chroma subsampling format of an image block output by the neural network model.

It should be noted herein that a stride of a convolutional layer corresponding to the first luma data may be the same as or different from a stride of a convolutional layer corresponding to the second chroma data. Whether the strides are the same may depend on dimensions of the first luma data and the first chroma data.

Optionally, for example, if the target chroma subsampling format is a 4:2:0 format, it indicates that a horizontal resolution and a vertical resolution of chroma are 1/2 of those of luma. Based on this, it is determined that the stride of the convolutional layer corresponding to the first luma data is 2, and the stride of the convolutional layer corresponding to the first chroma data is 1. For example, if the target chroma subsampling format is a 4:4:4 format, it indicates that a horizontal resolution and a vertical resolution of luma are the same as those of chroma. Based on this, it is determined that the stride of the convolutional layer corresponding to the first luma data is 1, and the stride of the convolutional layer corresponding to the first chroma data is 1; or it is determined that the stride of the convolutional layer corresponding to the first luma data is 2, and the stride of the convolutional layer corresponding to the first chroma data is 2.

It should be noted that, to ensure that dimensions of outputs obtained after the first luma data and the first chroma data pass through the convolutional layers meet a requirement, for different chroma subsampling formats, the first chroma data needs to be sampled before being input into the convolutional layer. Optionally, in an implementation, before the inputting the first luma data and the first chroma data into different convolutional layers of a neural network model, respectively, to perform video compression processing, the method further includes:
if the target chroma subsampling format of the image block is different from an initial chroma subsampling format, adjusting, based on a relationship between the target chroma subsampling format and the initial chroma subsampling format, a width or a height of an image block corresponding to the first chroma data, where
the initial chroma subsampling format is a chroma subsampling format of the image block before the image block is input into the neural network model.

It should be noted that the width or the height of the image block corresponding to the first chroma data is adjusted based on the target chroma subsampling format and the initial chroma subsampling format before the first chroma data is input into the convolutional layer of the neural network, to adjust the first chroma data to a width and a height corresponding to the target chroma subsampling format. In this way, it is ensured that chroma data that meets a requirement of the target chroma subsampling format can be output.

It should be noted that the first chroma data needs to be processed only when the target chroma subsampling format is different from the initial chroma subsampling format. If the target chroma subsampling format is the same as the initial chroma subsampling format, it indicates that the first chroma data does not need to be processed.

Optionally, in a case that the target chroma subsampling format is the 4:2:0 format, if the initial chroma subsampling format is the 4:4:4 format, both the width and the height of the image block related to the first chroma data need to be reduced to half of the width and the height. If the initial chroma subsampling format is the 4:2:2 format, it indicates that a horizontal resolution of chroma is 1/2 of that of luma. Based on this, it is determined that the height of the image block related to the first chroma data needs to be reduced to half of the height. If the initial chroma subsampling format is 4:1:1, it indicates that a horizontal resolution of chroma is 1/4 of that of luma, and a vertical resolution of chroma is equal to that of luma. Based on this, it is determined that heights of all image blocks related to the first chroma data need to be reduced to half of the heights, and widths of the image blocks need to be increased to twice the widths. For example, in a case that the target chroma subsampling format is the 4:4:4 format, if the initial chroma subsampling format is the 4:2:0 format, both the width and the height of the image block related to the first chroma data need to be increased to twice the width and the height. If the initial chroma subsampling format is the 4:2:2 format, the width of the image block related to the first chroma data needs to be increased to twice the width. If the initial chroma subsampling format is the 4:1:1 format, the width of the image block related to the first chroma data needs to be increased to four times the width.

Optionally, in an implementation, inputting the first luma data into a convolutional layer of the neural network model includes one of the following:
B11. All component data in the first luma data is input into a convolutional layer of a first stride.

It should be noted that because the first luma data may further include a plurality of pieces of different component data, the different component data in the first luma data is input into a same convolutional layer to perform processing together. In other words, in this case, the component data in the first luma data is not distinguished from each other.

For example, if the first luma data includes the luma reconstruction block, the luma prediction block, and the luma boundary strength, all of the luma reconstruction block, the luma prediction block, and the luma boundary strength need to be input into the same convolutional layer of the first stride.

It should be noted that inputting all the component data in the first luma data into the same convolutional layer can reduce a quantity of convolutional layers used for the first luma data and increase a processing rate of feature extraction.

B12. Different component data in the first luma data is input into convolutional layers of a first stride that correspond to the component data, respectively.

It should be noted that in this case, a quantity of convolutional layers depends on a quantity of pieces of component data included in the first luma data, in other words, different component data is input into different convolutional layers.

For example, if the first luma data includes the luma reconstruction block, the luma prediction block, and the luma boundary strength, the luma reconstruction block needs to be input into a convolutional layer 1 of the first stride, the luma prediction block needs to be input into a convolutional layer 2 of the first stride, and the luma boundary strength needs to be input into a convolutional layer 3 of the first stride.

It should be noted that different component data in the first luma data is input into different convolutional layers, so that feature extraction can be separately performed based on the different component data, thereby improving accuracy of feature extraction.

Optionally, in an implementation, inputting the first chroma data into a convolutional layer of the neural network model includes one of the following:
B21. All component data in the first chroma data is input into a convolutional layer of a second stride.

It should be noted that because the first luma data may further include a plurality of pieces of different component data, the different component data in the first chroma data is input into a same convolutional layer to perform processing together. In other words, in this case, the component data in the first chroma data is not distinguished from each other.

For example, if the first chroma data includes the chroma reconstruction block, the chroma prediction block, and the chroma boundary strength, all of the chroma reconstruction block, the chroma prediction block, and the chroma boundary strength need to be input into the same convolutional layer of the second stride.

It should be noted that inputting all the component data in the first chroma data into the same convolutional layer can reduce a quantity of convolutional layers used for the first chroma data and increase a processing rate of feature extraction.

B22. Blue component data in the first chroma data is input into a convolutional layer that is of a second stride and that corresponds to the blue component data, and red component data in the first chroma data is input into a convolutional layer that is of the second stride and that corresponds to the red component data.

It should be noted that in this case, a quantity of convolutional layers depends on a quantity of pieces of component data included in the first chroma data, in other words, different component data is input into different convolutional layers.

For example, the red component data in the first chroma data is input into a convolutional layer 1 of the second stride, and the blue component data in the first chroma data is input into a convolutional layer 2 of the first stride.

It should be noted that different component data in the first chroma data is input into different convolutional layers, so that feature extraction can be separately performed based on the different component data, thereby improving accuracy of feature extraction.

B23. Different component type data corresponding to blue component data and red component data in the first chroma data is input into convolutional layers of a second stride that correspond to the component type data.

It should be noted that because the red component data and the blue component data may further include data of a plurality of component types, data of a same component type is input into a same convolutional layer, and data of different component types is input into different convolutional layers.

For example, if the red component data includes a chroma reconstruction block and a chroma prediction block that correspond to a red component, and the blue component data includes a chroma reconstruction block and a chroma prediction block that correspond to a blue component, the chroma reconstruction blocks in the red component data and the blue component data are input into a convolutional layer 1 of the second stride, and the chroma prediction blocks in the red component data and the blue component data are input into a convolutional layer 2 of the second stride.

It should be noted that data of different component types in the first chroma data is input into different convolutional layers, so that feature extraction can be separately performed based on the data of the different component types, thereby improving accuracy of feature extraction.

Optionally, in an implementation, that different component type data corresponding to blue component data and red component data in the first chroma data is input into convolutional layers of a second stride that correspond to the component type data includes at least one of the following:

B231. In a case that the component type data corresponding to the blue component data and the red component data in the first chroma data includes a chroma reconstruction block, a luma reconstruction block is added to the chroma reconstruction block, and the chroma reconstruction block and the luma reconstruction block are input into a convolutional layer that is of the second stride and that corresponds to the chroma reconstruction block.

Optionally, in an implementation, that a luma reconstruction block is added to the chroma reconstruction block, and the chroma reconstruction block and the luma reconstruction block are input into a convolutional layer that is of the second stride and that corresponds to the chroma reconstruction block is specifically implemented as follows:
determining, based on the initial chroma subsampling format of the image block, whether to downsample the luma reconstruction block; and
in a case that it is determined that the luma reconstruction block needs to be downsampled, adding a downsampled luma reconstruction block to the chroma reconstruction block, and inputting the downsampled luma reconstruction block and the chroma reconstruction block into the convolutional layer that is of the second stride and that corresponds to the chroma reconstruction block; or
in a case that it is determined that the luma reconstruction block does not need to be downsampled, adding the luma reconstruction block to the chroma reconstruction block, and inputting the luma reconstruction block and the chroma reconstruction block into the convolutional layer that is of the second stride and that corresponds to the chroma reconstruction block.

It should be noted that when luma reconstruction feature extraction is performed based on chroma by using a convolutional layer, a luma reconstruction data feature is added, so that a relationship between a luma component and a chroma component can be used to obtain more useful feature maps, thereby improving accuracy of chroma reconstruction feature extraction.

B232. In a case that the component type data corresponding to the blue component data and the red component data in the first chroma data includes a chroma prediction block, a luma prediction block is added to the chroma prediction block, and the chroma prediction block and the luma prediction block are input into a convolutional layer that is of the second stride and that corresponds to the chroma prediction block.

It should be noted that when luma prediction feature extraction is performed based on chroma by using a convolutional layer, a luma prediction data feature is added, so that a relationship between a luma component and a chroma component can be used to obtain more useful feature maps, thereby improving accuracy of chroma prediction feature extraction.

B24. Different component type data in blue component data in the first chroma data is input into convolutional layers of a second stride that correspond to the component type data, respectively, and different component type data in red component data in the first chroma data is input into convolutional layers of the second stride that correspond to the component type data, respectively.

It should be noted that in this case, component data is distinguished from each other, and component type data is also distinguished from each other, in other words, different component type data in same component data is input into different convolutional layers, and same component type data in different component data is also input into different convolutional layers.

For example, if the red component data in the first chroma data includes a chroma reconstruction block and a chroma prediction block that correspond to a red component, and the blue component data includes a chroma reconstruction block and a chroma prediction block that correspond to a blue component, the chroma reconstruction block in the red component data is input into a convolutional layer 1 of the second stride, the chroma prediction block in the red component data is input into a convolutional layer 2 of the second stride, the chroma reconstruction block in the blue component data is input into a convolutional layer 3 of the second stride, and the chroma prediction block in the blue component data is input into a convolutional layer 4 of the second stride.

It should be noted that different component type data in different component data in the first chroma data is input into different convolutional layers, so that feature extraction can be separately performed based on the different component type data in the different component data, thereby improving accuracy of feature extraction.

It should be noted that B11 or B12 may be combined with any one of B21 to B24.

Optionally, to further reduce a data amount of luma data, in an implementation, the method further includes:
downsampling auxiliary data included in the first luma data, where
the auxiliary data is component data other than the luma reconstruction block in the first luma data, and a value of a first stride of a convolutional layer corresponding to the auxiliary data is different from a value of a first stride of a convolutional layer corresponding to the luma reconstruction block.

It should be noted that because a luma reconstruction block ultimately needs to be obtained by performing video compression processing, the luma reconstruction block is mainly considered for video compression processing, while other luma data is used as an auxiliary and a relatively small amount of data thereof may be used. Therefore, the luma data used as an auxiliary may be downsampled, to reduce a resolution, so as to reduce a data amount, thereby reducing computational complexity of the neural network model.

Optionally, in an implementation, a quantity of channels of a convolutional layer corresponding to the first luma data is different from a quantity of channels of a convolutional layer corresponding to the first chroma data.

Optionally, the quantity of channels is a quantity of channels of a feature map output by the convolutional layer of the neural network model.

It should be noted that because the first luma data and the first chroma data are input into different convolutional layers, different quantities of channels may be set for different data based on importance of the first luma data and the first chroma data. Because the quantity of channels represents a parameter count of the model, parameter counts of different types of data can be flexibly set in this manner of this application, so that the parameter count of the model can be reduced.

Optionally, a process of performing filtering processing based on the neural network model in this embodiment of this application may be as follows: First, feature extraction is performed on the first luma data and the first chroma data by using convolutional layers and activation layers (it should be noted that each convolutional layer may correspond to one activation layer, where for example, the activation layer may be a parameter rectified linear unit (Parametric Rectified Linear Unit, PReLU)), to generate N feature maps, where N is a positive integer. Then feature fusion is performed on these feature maps by using a convolutional layer and an activation layer, to generate M fused feature maps, where M is a positive integer. Then feature enhancement is performed on the fused feature maps by using a plurality of residual blocks, to generate K enhanced feature maps, where K is a positive integer. Finally, operations of a convolutional layer, an activation layer, and the like are performed on these enhanced feature maps, to generate a filtered reconstructed image block.

Optionally, a process of performing super-resolution reconstruction processing based on the neural network model in this embodiment of this application may be as follows: First, feature extraction is performed on the first luma data and the first chroma data by using convolutional layers and activation layers, to generate N feature maps, where N is a positive integer. Then feature fusion is performed on these feature maps by using a convolutional layer and an activation layer, to generate M fused feature maps, where M is a positive integer. Then feature enhancement is performed on the fused feature maps by using a plurality of residual blocks, to generate K enhanced feature maps. Finally, operations of a convolutional layer, an activation layer, upsampling, and the like are performed on these enhanced feature maps, to generate a high-resolution image block.

The following uses a video compression process in which filtering processing is performed based on a neural network model as an example for description.

Application case 1: All component data in first luma data is input into a convolutional layer of a stride 2, and all component data in first chroma data is input into a convolutional layer of a stride 1.

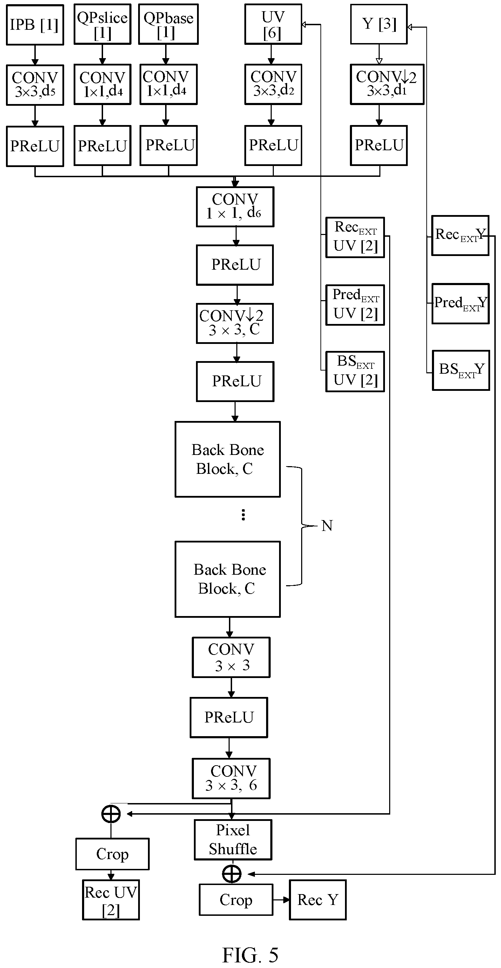

As shown in FIG. 5, Y[3] is first luma data with a quantity of input channels of 3. The first luma data is input into a convolutional layer (an output channel is d₁), and then feature extraction is performed by using an activation layer. UV[6] is first chroma data with a quantity of input channels of 6. The first chroma data is input into a convolutional layer (an output channel is d₂), and then feature extraction is performed by using an activation layer. QPbase[1] is a quantization parameter of a video sequence with a quantity of input channels of 1. The quantization parameter is input into a convolutional layer (an output channel is d₄), and then feature extraction is performed by using an activation layer. QPslice[1] is a quantization parameter of each frame with a quantity of input channels of 1. The quantization parameter is input into a convolutional layer (an output channel is d₄), and then feature extraction is performed by using an activation layer. IPB[1] is mode information (intra prediction, inter unidirectional prediction, or inter bidirectional prediction) of a coding block with a quantity of input channels of 1. The mode information is input into a convolutional layer (an output channel is d₅), and then feature extraction is performed by using an activation layer. Extracted features are input into a convolutional layer (an output channel is d₆), then feature fusion is performed by using an activation layer, and then fused features are input into a plurality of residual blocks for feature enhancement. A pixel shuffle is performed on enhanced features by using a convolutional layer and an activation layer, and features obtained through the pixel shuffle are cropped to obtain a reconstructed luma block. The enhanced features are cropped by using a convolutional layer and an activation layer, to obtain a reconstructed chroma block.

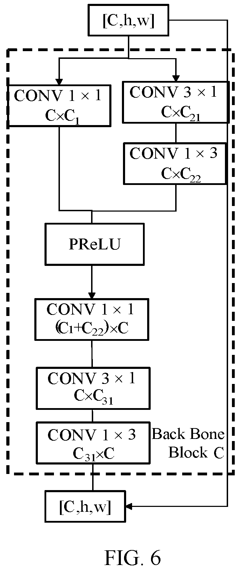

Optionally, as shown in FIG. 6, an implementation process of performing feature enhancement by using a residual block is as follows:
Input data is input into a convolutional layer to obtain an output feature map, and the output feature map is input into a convolutional layer to obtain an output feature map. The output feature map and the input data are added to obtain a residual feature.

Application case 2: All component data in first luma data is input into a convolutional layer of a stride 2, blue component data in first chroma data is input into a convolutional layer that is of a stride 1 and that corresponds to the blue component data, and red component data in the first chroma data is input into a convolutional layer that is of the stride 1 and that corresponds to the red component data.

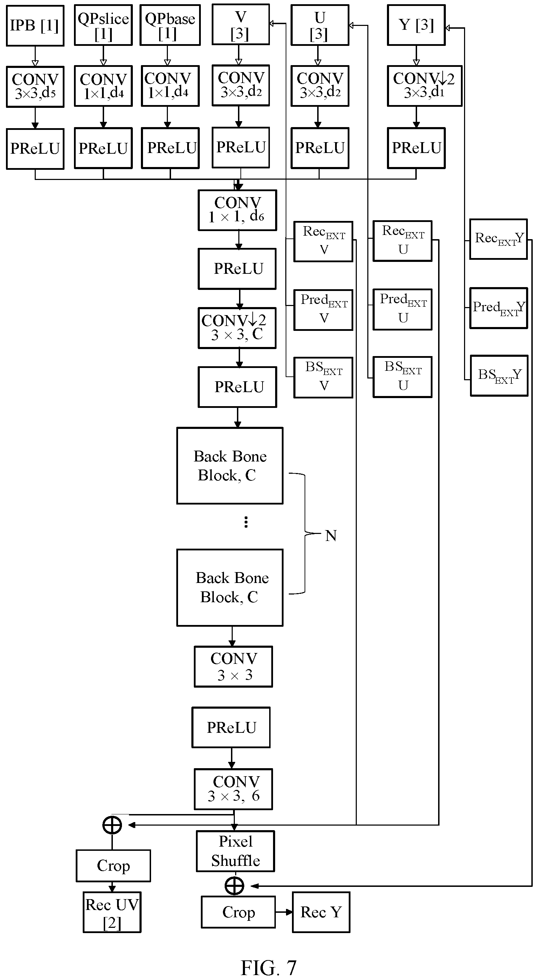

As shown in FIG. 7, Y[3] is first luma data with a quantity of input channels of 3. The first luma data is input into a convolutional layer (an output channel is d₁), and then feature extraction is performed by using an activation layer. U[3] is blue component data with a quantity of input channels of 3. The blue component data is input into a convolutional layer (an output channel is d₂), and then feature extraction is performed by using an activation layer. V[3] is red component data with a quantity of input channels of 3. The red component data is input into a convolutional layer (an output channel is d₂), and then feature extraction is performed by using an activation layer. QPbase[1] is a quantization parameter of a video sequence with a quantity of input channels of 1. The quantization parameter is input into a convolutional layer (an output channel is d₄), and then feature extraction is performed by using an activation layer. QPslice[1] is a quantization parameter of each frame with a quantity of input channels of 1. The quantization parameter is input into a convolutional layer (an output channel is d₄), and then feature extraction is performed by using an activation layer. IPB[1] is mode information (intra prediction, inter unidirectional prediction, or inter bidirectional prediction) of a coding block with a quantity of input channels of 1. The mode information is input into a convolutional layer (an output channel is d₅), and then feature extraction is performed by using an activation layer. Extracted features are input into a convolutional layer (an output channel is d₆), then feature fusion is performed by using an activation layer, and then fused features are input into a plurality of residual blocks for feature enhancement. A pixel shuffle is performed on enhanced features by using a convolutional layer and an activation layer, and features obtained through the pixel shuffle are cropped to obtain a reconstructed luma block. The enhanced features are cropped by using a convolutional layer and an activation layer, to obtain a reconstructed chroma block.

Application case 3: Different component data in first luma data is input into convolutional layers of a stride 2 that correspond to the component data, respectively, and different component type data corresponding to blue component data and red component data in first chroma data is input into convolutional layers of a stride 1 that correspond to the component type data, respectively.

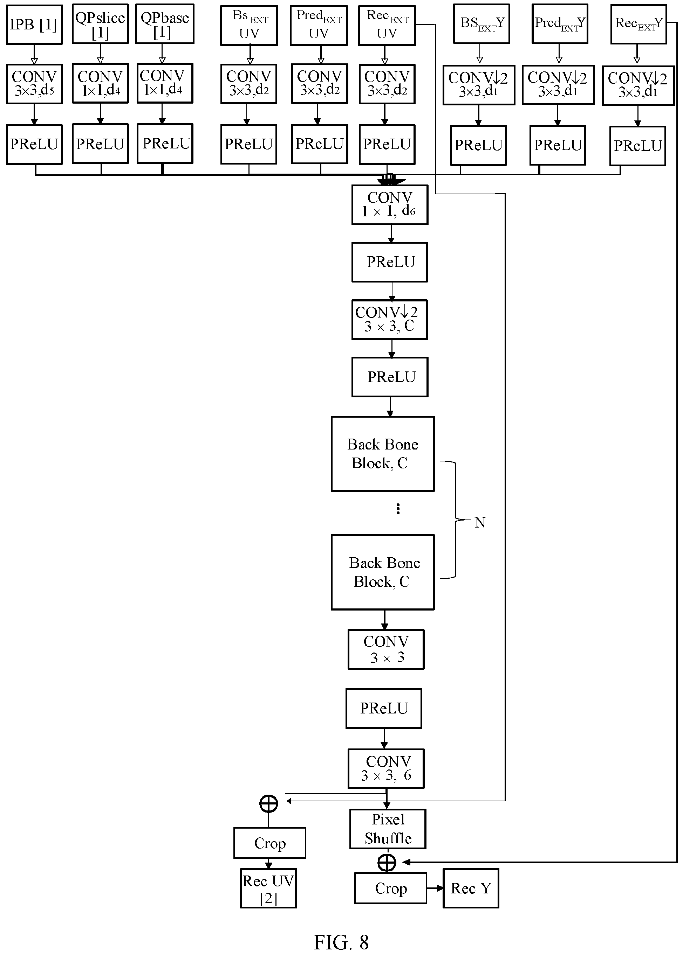

As shown in FIG. 8, REC_{EXT}Y is a luma reconstruction block. The luma reconstruction block is input into a convolutional layer (an output channel is d₁), and then feature extraction is performed by using an activation layer. Pred_{EXT}Y is a luma prediction block. The luma prediction block is input into a convolutional layer (an output channel is d₁), and then feature extraction is performed by using an activation layer. BS_{EXT}Y is luma boundary strength. The luma boundary strength is input into a convolutional layer (an output channel is d₁), and then feature extraction is performed by using an activation layer. REC_{EXT}UV is a chroma reconstruction block. The chroma reconstruction block is input into a convolutional layer (an output channel is d₂), and then feature extraction is performed by using an activation layer. Pred_{EXT}UV is a chroma prediction block. The chroma prediction block is input into a convolutional layer (an output channel is d₂), and then feature extraction is performed by using an activation layer. BS_{EXT}UV is chroma boundary strength. The chroma boundary strength is input into a convolutional layer (an output channel is d₂), and then feature extraction is performed by using an activation layer. QPbase[1] is a quantization parameter of a video sequence with a quantity of input channels of 1. The quantization parameter is input into a convolutional layer (an output channel is d₄), and then feature extraction is performed by using an activation layer. QPslice[1] is a quantization parameter of each frame with a quantity of input channels of 1. The quantization parameter is input into a convolutional layer (an output channel is d₄), and then feature extraction is performed by using an activation layer. IPB[1] is mode information (intra prediction, inter unidirectional prediction, or inter bidirectional prediction) of a coding block with a quantity of input channels of 1. The mode information is input into a convolutional layer (an output channel is d₅), and then feature extraction is performed by using an activation layer. Extracted features are input into a convolutional layer (an output channel is d₆), then feature fusion is performed by using an activation layer, and then fused features are input into a plurality of residual blocks for feature enhancement. A pixel shuffle is performed on enhanced features by using a convolutional layer and an activation layer, and features obtained through the pixel shuffle are cropped to obtain a reconstructed luma block. The enhanced features are cropped by using a convolutional layer and an activation layer, to obtain a reconstructed chroma block.

Application case 4: Different component data in first luma data is input into convolutional layers of a stride 2 that correspond to the component data, respectively, different component type data in blue component data in first chroma data is input into convolutional layers of a stride 1 that correspond to the component type data, respectively, and different component type data in red component data in the first chroma data is input into convolutional layers of the stride 1 that correspond to the component type data, respectively.

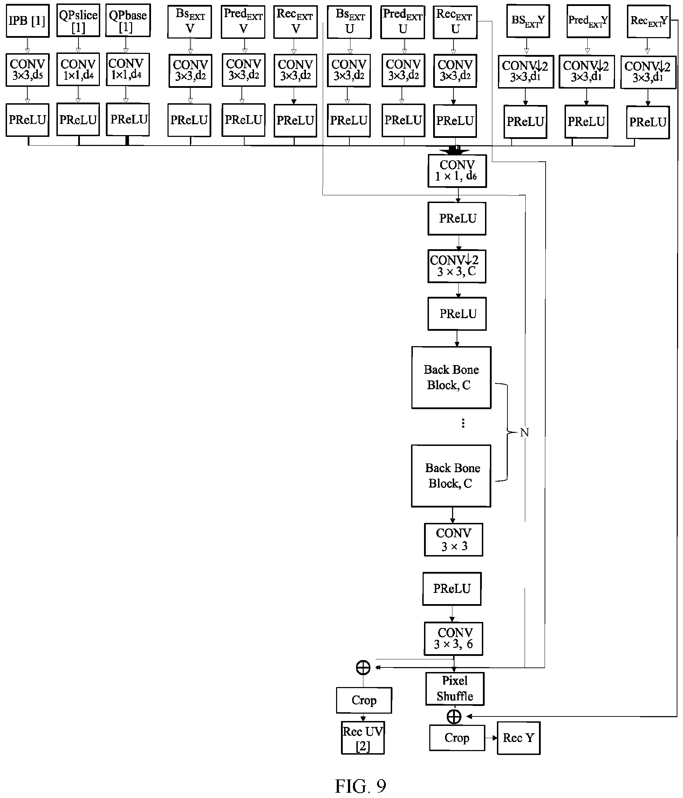

As shown in FIG. 9, REC_{EXT}Y is a luma reconstruction block. The luma reconstruction block is input into a convolutional layer (an output channel is d₁), and then feature extraction is performed by using an activation layer. Pred_{EXT}Y is a luma prediction block. The luma prediction block is input into a convolutional layer (an output channel is d₁), and then feature extraction is performed by using an activation layer. BS_{EXT}Y is luma boundary strength. The luma boundary strength is input into a convolutional layer (an output channel is d₁), and then feature extraction is performed by using an activation layer. REC_{EXT}U is a chroma reconstruction block corresponding to blue component data. The chroma reconstruction block is input into a convolutional layer (an output channel is d₂), and then feature extraction is performed by using an activation layer. Pred_{EXT}U is a chroma prediction block corresponding to the blue component data. The chroma prediction block is input into a convolutional layer (an output channel is d₂), and then feature extraction is performed by using an activation layer. BS_{EXT}U is chroma boundary strength corresponding to the blue component data. The chroma boundary strength is input into a convolutional layer (an output channel is d₂), and then feature extraction is performed by using an activation layer. REC_{EXT}V is a chroma reconstruction block corresponding to red component data. The chroma reconstruction block is input into a convolutional layer (an output channel is d₂), and then feature extraction is performed by using an activation layer. Pred_{EXT}V is a chroma prediction block corresponding to the red component data. The chroma prediction block is input into a convolutional layer (an output channel is d₂), and then feature extraction is performed by using an activation layer. BS_{EXT}V is chroma boundary strength corresponding to the red component data. The chroma boundary strength is input into a convolutional layer (an output channel is d₂), and then feature extraction is performed by using an activation layer. QPbase[1] is a quantization parameter of a video sequence with a quantity of input channels of 1. The quantization parameter is input into a convolutional layer (an output channel is d₄), and then feature extraction is performed by using an activation layer. QPslice[1] is a quantization parameter of each frame with a quantity of input channels of 1. The quantization parameter is input into a convolutional layer (an output channel is d₄), and then feature extraction is performed by using an activation layer. IPB[1] is mode information (intra prediction, inter unidirectional prediction, or inter bidirectional prediction) of a coding block with a quantity of input channels of 1. The mode information is input into a convolutional layer (an output channel is d₅), and then feature extraction is performed by using an activation layer. Extracted features are input into a convolutional layer (an output channel is d₆), then feature fusion is performed by using an activation layer, and then fused features are input into a plurality of residual blocks for feature enhancement. A pixel shuffle is performed on enhanced features by using a convolutional layer and an activation layer, and features obtained through the pixel shuffle are cropped to obtain a reconstructed luma block. The enhanced features are cropped by using a convolutional layer and an activation layer, to obtain a reconstructed chroma block.

Application case 5: Different component data in first luma data is input into convolutional layers of a stride 2 that correspond to the component data, respectively, different component type data corresponding to blue component data and red component data in first chroma data is input into convolutional layers of a stride 1 that correspond to the component type data, respectively, and a luma reconstruction block is added to a chroma reconstruction block.

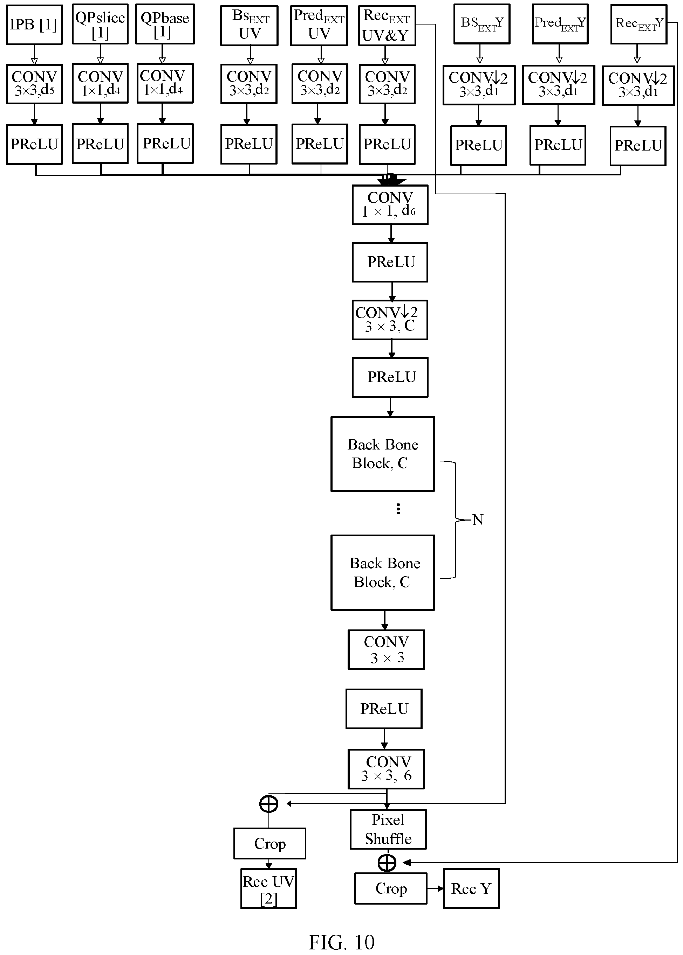

As shown in FIG. 10, REC_{EXT}Y is a luma reconstruction block. The luma reconstruction block is input into a convolutional layer (an output channel is d₁), and then feature extraction is performed by using an activation layer. Pred_{EXT}Y is a luma prediction block. The luma prediction block is input into a convolutional layer (an output channel is d₁), and then feature extraction is performed by using an activation layer. BS_{EXT}Y is luma boundary strength. The luma boundary strength is input into a convolutional layer (an output channel is d₁), and then feature extraction is performed by using an activation layer. REC_{EXT}UV&Y is a chroma reconstruction block with a luma reconstruction block added. The chroma reconstruction block with the luma reconstruction block added is input into a convolutional layer (an output channel is d₂), and then feature extraction is performed by using an activation layer. Pred_{EXT}UV is a chroma prediction block. The chroma prediction block is input into a convolutional layer (an output channel is d₂), and then feature extraction is performed by using an activation layer. BS_{EXT}UV is chroma boundary strength. The chroma boundary strength is input into a convolutional layer (an output channel is d₂), and then feature extraction is performed by using an activation layer. QPbase[1] is a quantization parameter of a video sequence with a quantity of input channels of 1. The quantization parameter is input into a convolutional layer (an output channel is d₄), and then feature extraction is performed by using an activation layer. QPslice[1] is a quantization parameter of each frame with a quantity of input channels of 1. The quantization parameter is input into a convolutional layer (an output channel is d₄), and then feature extraction is performed by using an activation layer. IPB[1] is mode information (intra prediction, inter unidirectional prediction, or inter bidirectional prediction) of a coding block with a quantity of input channels of 1. The mode information is input into a convolutional layer (an output channel is d₅), and then feature extraction is performed by using an activation layer. Extracted features are input into a convolutional layer (an output channel is d₆), then feature fusion is performed by using an activation layer, and then fused features are input into a plurality of residual blocks for feature enhancement. A pixel shuffle is performed on enhanced features by using a convolutional layer and an activation layer, and features obtained through the pixel shuffle are cropped to obtain a reconstructed luma block. The enhanced features are cropped by using a convolutional layer and an activation layer, to obtain a reconstructed chroma block.

Application case 6: Different component data in first luma data is input into convolutional layers of a stride 2 that correspond to the component data, respectively, and different component type data corresponding to blue component data and red component data in first chroma data is input into convolutional layers of a stride 1 that correspond to the component type data, respectively. A luma prediction block and luma boundary strength are downsampled before being input.

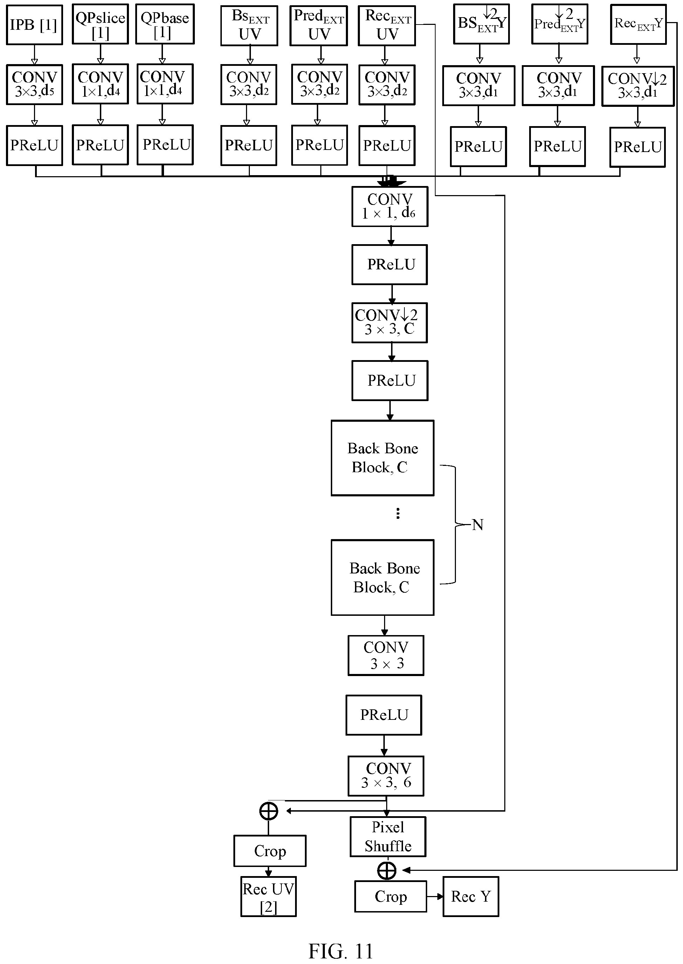

As shown in FIG. 11, REC_{EXT}Y is a luma reconstruction block. The luma reconstruction block is input into a convolutional layer (an output channel is d₁), and then feature extraction is performed by using an activation layer. Pred_{EXT}Y is a luma prediction block. The luma prediction block is first downsampled, then a downsampled luma prediction block is input into a convolutional layer (an output channel is d₁), and then feature extraction is performed by using an activation layer. BS_{EXT}Y is luma boundary strength. The luma boundary strength is first downsampled, then downsampled luma boundary strength is input into a convolutional layer (an output channel is d₁), and then feature extraction is performed by using an activation layer. REC_{EXT}UV is a chroma reconstruction block. The chroma reconstruction block is input into a convolutional layer (an output channel is d₂), and then feature extraction is performed by using an activation layer. Pred_{EXT}UV is a chroma prediction block. The chroma prediction block is input into a convolutional layer (an output channel is d₂), and then feature extraction is performed by using an activation layer. BS_{EXT}UV is chroma boundary strength. The chroma boundary strength is input into a convolutional layer (an output channel is d₂), and then feature extraction is performed by using an activation layer. QPbase[1] is a quantization parameter of a video sequence with a quantity of input channels of 1. The quantization parameter is input into a convolutional layer (an output channel is d₄), and then feature extraction is performed by using an activation layer. QPslice[1] is a quantization parameter of each frame with a quantity of input channels of 1. The quantization parameter is input into a convolutional layer (an output channel is d₄), and then feature extraction is performed by using an activation layer. IPB[1] is mode information (intra prediction, inter unidirectional prediction, or inter bidirectional prediction) of a coding block with a quantity of input channels of 1. The mode information is input into a convolutional layer (an output channel is d₅), and then feature extraction is performed by using an activation layer. Extracted features are input into a convolutional layer (an output channel is d₆), then feature fusion is performed by using an activation layer, and then fused features are input into a plurality of residual blocks for feature enhancement. A pixel shuffle is performed on enhanced features by using a convolutional layer and an activation layer, and features obtained through the pixel shuffle are cropped to obtain a reconstructed luma block. The enhanced features are cropped by using a convolutional layer and an activation layer, to obtain a reconstructed chroma block.

In conclusion, it can be learned from the foregoing descriptions that in embodiments of this application, input data of the neural network model is adjusted, so that an amount of data input into the neural network model is minimized, thereby reducing data processing complexity and a parameter count of the neural network model.

The image block compression processing method provided in embodiments of this application may be performed by an image block compression processing apparatus. In embodiments of this application, an example in which the image block compression processing apparatus performs the image block compression processing method is used to describe an image block compression processing apparatus provided in embodiments of this application.

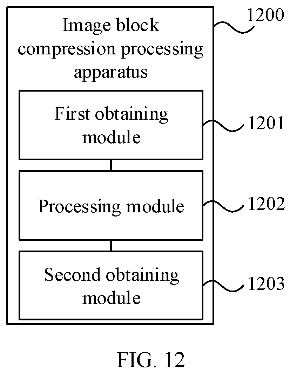

As shown in FIG. 12, an image block compression processing apparatus 1200 in an embodiment of this application includes:
a first obtaining module 1201, configured to obtain first luma data and first chroma data of an image block;
a processing module 1202, configured to input the first luma data and the first chroma data into different convolutional layers of a neural network model, respectively, to perform video compression processing; and
a second obtaining module 1203, configured to obtain second luma data and second chroma data that are output by the neural network model.

Optionally, the apparatus further includes:
a determining module, configured to determine, based on a target chroma subsampling format of the image block, strides of the convolutional layers respectively corresponding to the first luma data and the second chroma data, where
the target chroma subsampling format is a chroma subsampling format of an image block output by the neural network model.

Optionally, the apparatus further includes:
an adjustment module, configured to: if the target chroma subsampling format of the image block is different from an initial chroma subsampling format, adjust, based on a relationship between the target chroma subsampling format and the initial chroma subsampling format, a width or a height of an image block corresponding to the first chroma data, where
the initial chroma subsampling format is a chroma subsampling format of the image block before the image block is input into the neural network model.

Optionally, the processing module 1202 is configured to implement one of the following:
inputting all component data in the first luma data into a convolutional layer of a first stride; and
inputting different component data in the first luma data into convolutional layers of a first stride that correspond to the component data, respectively.

Optionally, the processing module 1202 is configured to implement one of the following:
inputting all component data in the first chroma data into a convolutional layer of a second stride;
inputting blue component data in the first chroma data into a convolutional layer that is of a second stride and that corresponds to the blue component data, and inputting red component data in the first chroma data into a convolutional layer that is of the second stride and that corresponds to the red component data;
inputting different component type data corresponding to blue component data and red component data in the first chroma data into convolutional layers of a second stride that correspond to the component type data, respectively; and
inputting different component type data in blue component data in the first chroma data into convolutional layers of a second stride that correspond to the component type data, respectively, and inputting different component type data in red component data in the first chroma data into convolutional layers of the second stride that correspond to the component type data, respectively.

Optionally, the processing module 1202 is configured to implement at least one of the following:
in a case that the component type data corresponding to the blue component data and the red component data in the first chroma data includes a chroma reconstruction block, adding a luma reconstruction block to the chroma reconstruction block, and inputting the chroma reconstruction block and the luma reconstruction block into a convolutional layer that is of the second stride and that corresponds to the chroma reconstruction block; and
in a case that the component type data corresponding to the blue component data and the red component data in the first chroma data includes a chroma prediction block, adding a luma prediction block to the chroma prediction block, and inputting the chroma prediction block and the luma prediction block into a convolutional layer that is of the second stride and that corresponds to the chroma prediction block.

Optionally, the processing module 1202 is configured to:
determine, based on the initial chroma subsampling format of the image block, whether to downsample the luma reconstruction block; and
in a case that it is determined that the luma reconstruction block needs to be downsampled, add a downsampled luma reconstruction block to the chroma reconstruction block, and input the downsampled luma reconstruction block and the chroma reconstruction block into the convolutional layer that is of the second stride and that corresponds to the chroma reconstruction block; or
in a case that it is determined that the luma reconstruction block does not need to be downsampled, add the luma reconstruction block to the chroma reconstruction block, and input the luma reconstruction block and the chroma reconstruction block into the convolutional layer that is of the second stride and that corresponds to the chroma reconstruction block.

Optionally, the apparatus further includes:
a sampling module, configured to downsample auxiliary data included in the first luma data, where
the auxiliary data is component data other than the luma reconstruction block in the first luma data, and a value of a first stride of a convolutional layer corresponding to the auxiliary data is different from a value of a first stride of a convolutional layer corresponding to the luma reconstruction block.

Optionally, the component data in the first luma data includes at least one of the following:
a luma reconstruction block, a luma prediction block, luma boundary strength, a luma residual block, and a luma transform coefficient block.

Optionally, the component data in the first chroma data includes at least one of the following:
blue component data; and
red component data.

Optionally, the blue component data and/or the red component data include/includes at least one of the following component type data:
a chroma reconstruction block, a chroma prediction block, chroma boundary strength, a chroma residual block, and a chroma transform coefficient block.

Optionally, the second luma data includes a filtered luma reconstruction block or a luma reconstruction block of a first resolution, and the first resolution is greater than a resolution of a luma reconstruction block corresponding to the first luma data; or
the second chroma data includes a filtered chroma reconstruction block or a chroma reconstruction block of a second resolution, and the second resolution is greater than a resolution of a chroma reconstruction block corresponding to the first chroma data.

Optionally, a quantity of channels of a convolutional layer corresponding to the first luma data is different from a quantity of channels of a convolutional layer corresponding to the first chroma data, where
the quantity of channels is a quantity of channels of a feature map output by the convolutional layer of the neural network model.

It should be noted that the apparatus embodiment corresponds to the foregoing method, all implementations in the foregoing method embodiment are applicable to the apparatus embodiment, and same technical effects can also be achieved.

The image block prediction apparatus in this embodiment of this application may be an electronic device, for example, an electronic device with an operating system, or may be a component in an electronic device, for example, an integrated circuit or a chip. The electronic device may be a terminal, or may be another device different from a terminal. For example, the terminal may include but is not limited to the foregoing listed types of the terminal 11. The another device may be a server, a network attached storage (Network Attached Storage, NAS), or the like. This is not specifically limited in this embodiment of this application.

The image block compression processing apparatus provided in this embodiment of this application can implement the processes implemented in the method embodiment of FIG. 4, and achieve same technical effects. To avoid repetition, details are not described herein again.

An embodiment of this application further provides an electronic device, including a processor and a communication interface. The processor is configured to: obtain first luma data and first chroma data of an image block;
input the first luma data and the first chroma data into different convolutional layers of a neural network model, respectively, to perform video compression processing; and
obtain second luma data and second chroma data that are output by the neural network model.

Optionally, the processor is further configured to:
determine, based on a target chroma subsampling format of the image block, strides of the convolutional layers respectively corresponding to the first luma data and the second chroma data, where
the target chroma subsampling format is a chroma subsampling format of an image block output by the neural network model.

Optionally, the processor is further configured to:
if the target chroma subsampling format of the image block is different from an initial chroma subsampling format, adjust, based on a relationship between the target chroma subsampling format and the initial chroma subsampling format, a width or a height of an image block corresponding to the first chroma data, where
the initial chroma subsampling format is a chroma subsampling format of the image block before the image block is input into the neural network model.

Optionally, the processor is configured to implement one of the following:
inputting all component data in the first luma data into a convolutional layer of a first stride; and
inputting different component data in the first luma data into convolutional layers of a first stride that correspond to the component data, respectively.

Optionally, the processor is configured to implement one of the following:
inputting all component data in the first chroma data into a convolutional layer of a second stride;
inputting blue component data in the first chroma data into a convolutional layer that is of a second stride and that corresponds to the blue component data, and inputting red component data in the first chroma data into a convolutional layer that is of the second stride and that corresponds to the red component data;
inputting different component type data corresponding to blue component data and red component data in the first chroma data into convolutional layers of a second stride that correspond to the component type data, respectively; and
inputting different component type data in blue component data in the first chroma data into convolutional layers of a second stride that correspond to the component type data, respectively, and inputting different component type data in red component data in the first chroma data into convolutional layers of the second stride that correspond to the component type data, respectively.

Optionally, the processor is configured to implement at least one of the following:
in a case that the component type data corresponding to the blue component data and the red component data in the first chroma data includes a chroma reconstruction block, adding a luma reconstruction block to the chroma reconstruction block, and inputting the chroma reconstruction block and the luma reconstruction block into a convolutional layer that is of the second stride and that corresponds to the chroma reconstruction block; and
in a case that the component type data corresponding to the blue component data and the red component data in the first chroma data includes a chroma prediction block, adding a luma prediction block to the chroma prediction block, and inputting the chroma prediction block and the luma prediction block into a convolutional layer that is of the second stride and that corresponds to the chroma prediction block.

Optionally, the processor is configured to:
determine, based on the initial chroma subsampling format of the image block, whether to downsample the luma reconstruction block; and
in a case that it is determined that the luma reconstruction block needs to be downsampled, add a downsampled luma reconstruction block to the chroma reconstruction block, and input the downsampled luma reconstruction block and the chroma reconstruction block into the convolutional layer that is of the second stride and that corresponds to the chroma reconstruction block; or
in a case that it is determined that the luma reconstruction block does not need to be downsampled, add the luma reconstruction block to the chroma reconstruction block, and input the luma reconstruction block and the chroma reconstruction block into the convolutional layer that is of the second stride and that corresponds to the chroma reconstruction block.

Optionally, the processor is further configured to:
downsample auxiliary data included in the first luma data, where
the auxiliary data is component data other than the luma reconstruction block in the first luma data, and a value of a first stride of a convolutional layer corresponding to the auxiliary data is different from a value of a first stride of a convolutional layer corresponding to the luma reconstruction block.

Optionally, the component data in the first luma data includes at least one of the following:
a luma reconstruction block, a luma prediction block, luma boundary strength, a luma residual block, and a luma transform coefficient block.

Optionally, the component data in the first chroma data includes at least one of the following:
blue component data; and
red component data.

Optionally, the blue component data and/or the red component data include/includes at least one of the following component type data:
a chroma reconstruction block, a chroma prediction block, chroma boundary strength, a chroma residual block, and a chroma transform coefficient block.

Optionally, the second luma data includes a filtered luma reconstruction block or a luma reconstruction block of a first resolution, and the first resolution is greater than a resolution of a luma reconstruction block corresponding to the first luma data; or
the second chroma data includes a filtered chroma reconstruction block or a chroma reconstruction block of a second resolution, and the second resolution is greater than a resolution of a chroma reconstruction block corresponding to the first chroma data.

Optionally, a quantity of channels of a convolutional layer corresponding to the first luma data is different from a quantity of channels of a convolutional layer corresponding to the first chroma data, where
the quantity of channels is a quantity of channels of a feature map output by the convolutional layer of the neural network model.

The electronic device embodiment corresponds to the foregoing method embodiment. Each implementation process and implementation of the foregoing method embodiment may be applied to the electronic device embodiment, and same technical effects can be achieved. Specifically, FIG. 12 is a schematic diagram of a hardware structure of an electronic device for implementing an embodiment of this application.

The electronic device 1300 includes but is not limited to at least some components in a radio frequency unit 1301, a network module 1302, an audio output unit 1303, an input unit 1304, a sensor 1305, a display unit 1306, a user input unit 1307, an interface unit 1308, a memory 1309, a processor 1310, and the like.

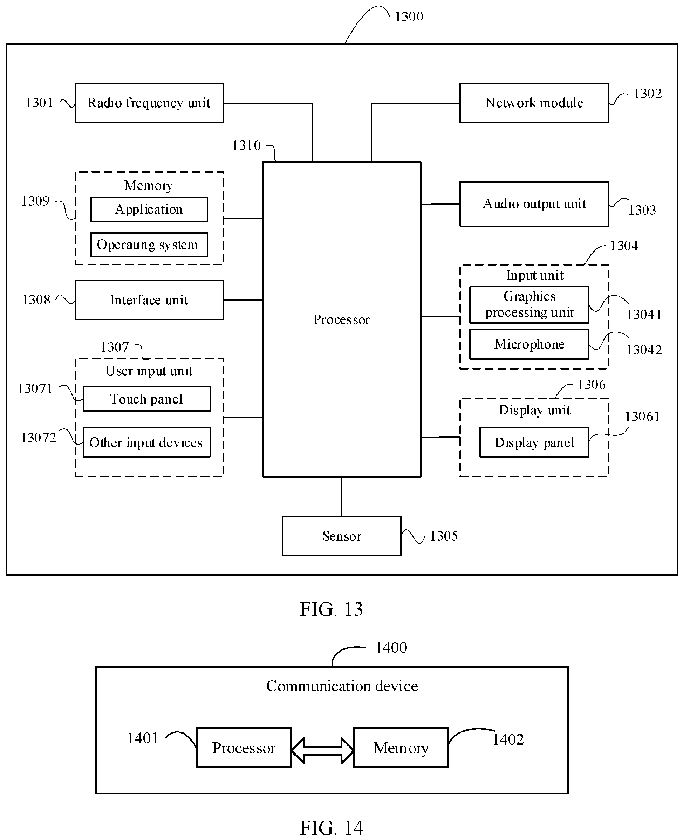

A person skilled in the art may understand that the electronic device 1300 may further include a power supply (for example, a battery) that supplies power to each component, and the power supply may be logically connected to the processor 1310 by using a power management system, to implement functions such as charging management, discharging management, and power consumption management by using the power management system. The structure of the electronic device shown in FIG. 13 does not constitute a limitation on the electronic device. The electronic device may include more or fewer components than those shown in the figure, or combine some components, or have different component arrangements. Details are not described herein.

It should be understood that in this embodiment of this application, the input unit 1304 may include a graphics processing unit (Graphics Processing Unit, GPU) 13041 and a microphone 13042, and the graphics processing unit 13041 processes image data of a still picture or a video obtained by an image capture apparatus (for example, a camera) in a video capture mode or an image capture mode. The display unit 1306 may include a display panel 13061, and the display panel 13061 may be configured in a form of a liquid crystal display, an organic light-emitting diode, or the like. The user input unit 1307 includes at least one of a touch panel 13071 and other input devices 13072. The touch panel 13071 is also referred to as a touchscreen. The touch panel 13071 may include two parts: a touch detection apparatus and a touch controller. The other input devices 13072 may include but are not limited to a physical keyboard, a function key (such as a volume control key or an on/off key), a trackball, a mouse, and a joystick. Details are not described herein.

In embodiments of this application, after receiving downlink data from an access network device, the radio frequency unit 1301 may transmit the downlink data to the processor 1310 for processing. In addition, the radio frequency unit 1301 may send uplink data to a network side device. Generally, the radio frequency unit 1301 includes but is not limited to an antenna, an amplifier, a transceiver, a coupler, a low-noise amplifier, a duplexer, and the like.

The memory 1309 may be configured to store a software program or instructions and various types of data. The memory 1309 may mainly include a first storage area for storing a program or instructions and a second storage area for storing data. The first storage area may store an operating system, an application or instructions required by at least one function (for example, a sound play function or an image play function), and the like. In addition, the memory 1309 may include a volatile memory or a non-volatile memory, or the memory 1309 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 1309 in this embodiment of this application includes but is not limited to these memories and any other suitable type of memory.

The processor 1310 may include one or more processing units. Optionally, the processor 1310 integrates an application processor and a modem processor. The application processor mainly processes operations related to an operating system, a user interface, an application, and the like. The modem processor, for example, a baseband processor, mainly processes a wireless communication signal. It may be understood that the foregoing modem processor may not be integrated into the processor 1310.

The processor 1310 is further configured to:
obtain first luma data and first chroma data of an image block;
input the first luma data and the first chroma data into different convolutional layers of a neural network model, respectively, to perform video compression processing; and
obtain second luma data and second chroma data that are output by the neural network model.

Optionally, the processor 1310 is further configured to:
determine, based on a target chroma subsampling format of the image block, strides of the convolutional layers respectively corresponding to the first luma data and the second chroma data, where
the target chroma subsampling format is a chroma subsampling format of an image block output by the neural network model.

Optionally, the processor 1310 is further configured to:
if the target chroma subsampling format of the image block is different from an initial chroma subsampling format, adjust, based on a relationship between the target chroma subsampling format and the initial chroma subsampling format, a width or a height of an image block corresponding to the first chroma data, where
the initial chroma subsampling format is a chroma subsampling format of the image block before the image block is input into the neural network model.

Optionally, the processor 1310 is configured to implement one of the following:
inputting all component data in the first luma data into a convolutional layer of a first stride; and
inputting different component data in the first luma data into convolutional layers of a first stride that correspond to the component data, respectively.

Optionally, the processor 1310 is configured to implement one of the following:
inputting all component data in the first chroma data into a convolutional layer of a second stride;
inputting blue component data in the first chroma data into a convolutional layer that is of a second stride and that corresponds to the blue component data, and inputting red component data in the first chroma data into a convolutional layer that is of the second stride and that corresponds to the red component data;
inputting different component type data corresponding to blue component data and red component data in the first chroma data into convolutional layers of a second stride that correspond to the component type data, respectively; and
inputting different component type data in blue component data in the first chroma data into convolutional layers of a second stride that correspond to the component type data, respectively, and inputting different component type data in red component data in the first chroma data into convolutional layers of the second stride that correspond to the component type data, respectively.

Optionally, the processor 1310 is configured to implement at least one of the following:
in a case that the component type data corresponding to the blue component data and the red component data in the first chroma data includes a chroma reconstruction block, adding a luma reconstruction block to the chroma reconstruction block, and inputting the chroma reconstruction block and the luma reconstruction block into a convolutional layer that is of the second stride and that corresponds to the chroma reconstruction block; and
in a case that the component type data corresponding to the blue component data and the red component data in the first chroma data includes a chroma prediction block, adding a luma prediction block to the chroma prediction block, and inputting the chroma prediction block and the luma prediction block into a convolutional layer that is of the second stride and that corresponds to the chroma prediction block.

Optionally, the processor 1310 is configured to:
determine, based on the initial chroma subsampling format of the image block, whether to downsample the luma reconstruction block; and
in a case that it is determined that the luma reconstruction block needs to be downsampled, add a downsampled luma reconstruction block to the chroma reconstruction block, and input the downsampled luma reconstruction block and the chroma reconstruction block into the convolutional layer that is of the second stride and that corresponds to the chroma reconstruction block; or
in a case that it is determined that the luma reconstruction block does not need to be downsampled, add the luma reconstruction block to the chroma reconstruction block, and input the luma reconstruction block and the chroma reconstruction block into the convolutional layer that is of the second stride and that corresponds to the chroma reconstruction block.

Optionally, the processor 1310 is further configured to:
downsample auxiliary data included in the first luma data, where
the auxiliary data is component data other than the luma reconstruction block in the first luma data, and a value of a first stride of a convolutional layer corresponding to the auxiliary data is different from a value of a first stride of a convolutional layer corresponding to the luma reconstruction block.

Optionally, the component data in the first luma data includes at least one of the following:
a luma reconstruction block, a luma prediction block, luma boundary strength, a luma residual block, and a luma transform coefficient block.

Optionally, the component data in the first chroma data includes at least one of the following:
blue component data; and
red component data.

Optionally, the blue component data and/or the red component data include/includes at least one of the following component type data:
a chroma reconstruction block, a chroma prediction block, chroma boundary strength, a chroma residual block, and a chroma transform coefficient block.

Optionally, the second luma data includes a filtered luma reconstruction block or a luma reconstruction block of a first resolution, and the first resolution is greater than a resolution of a luma reconstruction block corresponding to the first luma data; or
the second chroma data includes a filtered chroma reconstruction block or a chroma reconstruction block of a second resolution, and the second resolution is greater than a resolution of a chroma reconstruction block corresponding to the first chroma data.

Optionally, a quantity of channels of a convolutional layer corresponding to the first luma data is different from a quantity of channels of a convolutional layer corresponding to the first chroma data, where
the quantity of channels is a quantity of channels of a feature map output by the convolutional layer of the neural network model.

Preferably, an embodiment of this application further provides an electronic device, including a processor, a memory, and a program or instructions that are stored in the memory and capable of running on the processor. When the program or the instructions are executed by the processor, the processes in the foregoing image block compression processing method embodiment are implemented, and same technical effects can be achieved. To avoid repetition, details are not described herein again.

An embodiment of this application further provides a readable storage medium. The computer-readable storage medium stores a program or instructions. When the program or instructions are executed by a processor, the processes in the foregoing image block compression processing method embodiment are implemented, and same technical effects can be achieved. To avoid repetition, details are not described herein again.

The computer-readable storage medium is, for example, a read-only memory (Read-Only Memory, ROM), a random access memory (Random Access Memory, RAM), a magnetic disk, or an optical disc.

Optionally, as shown in FIG. 14, an embodiment of this application further provides a communication device 1400, including a processor 1401 and a memory 1402. The memory 1402 stores a program or instructions capable of running on the processor 1401. When the program or the instructions are executed by the processor 1401, the steps in the foregoing image block compression processing method embodiment are implemented, and same technical effects can be achieved.

An embodiment of this application further provides a chip. The chip includes a processor and a communication interface. The communication interface is coupled to the processor. The processor is configured to run a program or instructions to implement the processes in the foregoing image block compression processing method embodiment, and same technical effects can be achieved. To avoid repetition, details are not described herein again.

It should be understood that the chip mentioned in this embodiment of this application may also be referred to as a system-level chip, a system chip, a chip system, a system on chip, or the like.

An embodiment of this application further provides a computer program/program product. The computer program/program product is stored in a storage medium. The computer program/program product is executed by at least one processor to implement the processes in the foregoing image block compression processing method embodiment, and same technical effects can be achieved. To avoid repetition, details are not described herein again.

An embodiment of this application further provides an encoding and decoding system, including an image block compression processing apparatus. The image block compression processing apparatus may be configured to perform the steps of the foregoing image block compression processing method.

It should be noted that in this specification, the term "include", "comprise", or any other variant thereof is intended to cover a non-exclusive inclusion, so that a process, method, article, or apparatus that includes a list of elements not only includes those elements but also includes other elements that are not expressly listed, or further includes elements inherent to such a process, method, article, or apparatus. Without more limitations, an element preceded by "includes a ..." does not preclude the existence of additional identical elements in the process, method, article, or apparatus that includes the element. In addition, it should be noted that the scope of the method and apparatus in the implementations of this application is not limited to performing functions in an order shown or discussed, and can further include performing functions in a basically simultaneous manner or in a reverse order based on the functions involved. For example, the described method can be performed in an order different from the order described, and various steps may be added, omitted, or combined. In addition, features described with reference to some examples may be combined in other examples.

According to the foregoing descriptions of the implementations, a person skilled in the art can clearly understand that the method in the foregoing embodiments may be implemented by software and a necessary general-purpose hardware platform, or certainly can be implemented by hardware. However, in many cases, the former is a better implementation. Based on such an understanding, the technical solutions of this application essentially or the part contributing to the related technologies can be embodied in a form of a computer software product. The computer software product is stored in a storage medium (such as a ROM/RAM, a magnetic disk, or an optical disc), and includes several instructions for enabling a terminal (which may be a mobile phone, a computer, a server, an air conditioner, a network device, or the like) to perform the method described in embodiments of this application.

The foregoing describes embodiments of this application with reference to the accompanying drawings. However, this application is not limited to the foregoing specific implementations. The foregoing specific implementations are merely illustrative rather than restrictive. Inspired by this application, a person of ordinary skill in the art may develop many other manners without departing from principles of this application and the protection scope of the claims, and all such manners fall within the protection scope of this application.

## Claims

1. An image block compression processing method, comprising:
obtaining first luma data and first chroma data of an image block;
inputting the first luma data and the first chroma data into different convolutional layers of a neural network model, respectively, to perform video compression processing; and
obtaining second luma data and second chroma data that are output by the neural network model.

2. The method according to claim 1, further comprising:
determining, based on a target chroma subsampling format of the image block, strides of the convolutional layers respectively corresponding to the first luma data and the second chroma data, wherein
the target chroma subsampling format is a chroma subsampling format of an image block output by the neural network model.

3. The method according to claim 1 or 2, before the inputting the first luma data and the first chroma data into different convolutional layers of a neural network model, respectively, to perform video compression processing, further comprising:
if the target chroma subsampling format of the image block is different from an initial chroma subsampling format, adjusting, based on a relationship between the target chroma subsampling format and the initial chroma subsampling format, a width or a height of an image block corresponding to the first chroma data, wherein
the initial chroma subsampling format is a chroma subsampling format of the image block before the image block is input into the neural network model.

4. The method according to any one of claims 1 to 3, wherein inputting the first luma data into a convolutional layer of the neural network model comprises one of the following:
inputting all component data in the first luma data into a convolutional layer of a first stride; and
inputting different component data in the first luma data into convolutional layers of a first stride that correspond to the component data, respectively.

5. The method according to any one of claims 1 to 4, wherein inputting the first chroma data into a convolutional layer of the neural network model comprises one of the following:
inputting all component data in the first chroma data into a convolutional layer of a second stride;
inputting blue component data in the first chroma data into a convolutional layer that is of a second stride and that corresponds to the blue component data, and inputting red component data in the first chroma data into a convolutional layer that is of the second stride and that corresponds to the red component data;
inputting different component type data corresponding to blue component data and red component data in the first chroma data into convolutional layers of a second stride that correspond to the component type data, respectively; and
inputting different component type data in blue component data in the first chroma data into convolutional layers of a second stride that correspond to the component type data, respectively, and inputting different component type data in red component data in the first chroma data into convolutional layers of the second stride that correspond to the component type data, respectively.

6. The method according to claim 5, wherein the inputting different component type data corresponding to blue component data and red component data in the first chroma data into convolutional layers of a second stride that correspond to the component type data, respectively comprises at least one of the following:
in a case that the component type data corresponding to the blue component data and the red component data in the first chroma data comprises a chroma reconstruction block, adding a luma reconstruction block to the chroma reconstruction block, and inputting the chroma reconstruction block and the luma reconstruction block into a convolutional layer that is of the second stride and that corresponds to the chroma reconstruction block; and
in a case that the component type data corresponding to the blue component data and the red component data in the first chroma data comprises a chroma prediction block, adding a luma prediction block to the chroma prediction block, and inputting the chroma prediction block and the luma prediction block into a convolutional layer that is of the second stride and that corresponds to the chroma prediction block.

7. The method according to claim 6, wherein the adding a luma reconstruction block to the chroma reconstruction block, and inputting the chroma reconstruction block and the luma reconstruction block into a convolutional layer that is of the second stride and that corresponds to the chroma reconstruction block comprises:
determining, based on the initial chroma subsampling format of the image block, whether to downsample the luma reconstruction block; and
in a case that it is determined that the luma reconstruction block needs to be downsampled, adding a downsampled luma reconstruction block to the chroma reconstruction block, and inputting the downsampled luma reconstruction block and the chroma reconstruction block into the convolutional layer that is of the second stride and that corresponds to the chroma reconstruction block; or
in a case that it is determined that the luma reconstruction block does not need to be downsampled, adding the luma reconstruction block to the chroma reconstruction block, and inputting the luma reconstruction block and the chroma reconstruction block into the convolutional layer that is of the second stride and that corresponds to the chroma reconstruction block.

8. The method according to any one of claims 1 to 7, further comprising:
downsampling auxiliary data comprised in the first luma data, wherein
the auxiliary data is component data other than the luma reconstruction block in the first luma data, and a value of a first stride of a convolutional layer corresponding to the auxiliary data is different from a value of a first stride of a convolutional layer corresponding to the luma reconstruction block.

9. The method according to any one of claims 1 to 8, wherein the component data in the first luma data comprises at least one of the following:
a luma reconstruction block, a luma prediction block, luma boundary strength, a luma residual block, and a luma transform coefficient block.

10. The method according to any one of claims 1 to 8, wherein the component data in the first chroma data comprises at least one of the following:
blue component data; and
red component data.

11. The method according to claim 10, wherein the blue component data and/or the red component data comprise/comprises at least one of the following component type data:
a chroma reconstruction block, a chroma prediction block, chroma boundary strength, a chroma residual block, and a chroma transform coefficient block.

12. The method according to claim 1, wherein the second luma data comprises a filtered luma reconstruction block or a luma reconstruction block of a first resolution, and the first resolution is greater than a resolution of a luma reconstruction block corresponding to the first luma data; or
the second chroma data comprises a filtered chroma reconstruction block or a chroma reconstruction block of a second resolution, and the second resolution is greater than a resolution of a chroma reconstruction block corresponding to the first chroma data.

13. The method according to claim 1, wherein a quantity of channels of a convolutional layer corresponding to the first luma data is different from a quantity of channels of a convolutional layer corresponding to the first chroma data.

14. An image block compression processing apparatus, comprising:
a first obtaining module, configured to obtain first luma data and first chroma data of an image block;
a processing module, configured to input the first luma data and the first chroma data into different convolutional layers of a neural network model, respectively, to perform video compression processing; and
a second obtaining module, configured to obtain second luma data and second chroma data that are output by the neural network model.

15. The apparatus according to claim 14, further comprising:
a determining module, configured to determine, based on a target chroma subsampling format of the image block, strides of the convolutional layers respectively corresponding to the first luma data and the second chroma data, wherein
the target chroma subsampling format is a chroma subsampling format of an image block output by the neural network model.

16. The apparatus according to claim 14 or 15, further comprising:
an adjustment module, configured to: if the target chroma subsampling format of the image block is different from an initial chroma subsampling format, adjust, based on a relationship between the target chroma subsampling format and the initial chroma subsampling format, a width or a height of an image block corresponding to the first chroma data, wherein
the initial chroma subsampling format is a chroma subsampling format of the image block before the image block is input into the neural network model.

17. The apparatus according to any one of claims 14 to 16, wherein the processing module is configured to implement one of the following:
inputting all component data in the first luma data into a convolutional layer of a first stride; and
inputting different component data in the first luma data into convolutional layers of a first stride that correspond to the component data, respectively.

18. The apparatus according to any one of claims 14 to 17, wherein the processing module is configured to implement one of the following:
inputting all component data in the first chroma data into a convolutional layer of a second stride;
inputting blue component data in the first chroma data into a convolutional layer that is of a second stride and that corresponds to the blue component data, and inputting red component data in the first chroma data into a convolutional layer that is of the second stride and that corresponds to the red component data;
inputting different component type data corresponding to blue component data and red component data in the first chroma data into convolutional layers of a second stride that correspond to the component type data, respectively; and
inputting different component type data in blue component data in the first chroma data into convolutional layers of a second stride that correspond to the component type data, respectively, and inputting different component type data in red component data in the first chroma data into convolutional layers of the second stride that correspond to the component type data, respectively.

19. The apparatus according to claim 18, wherein the processing module is configured to implement at least one of the following:
in a case that the component type data corresponding to the blue component data and the red component data in the first chroma data comprises a chroma reconstruction block, adding a luma reconstruction block to the chroma reconstruction block, and inputting the chroma reconstruction block and the luma reconstruction block into a convolutional layer that is of the second stride and that corresponds to the chroma reconstruction block; and
in a case that the component type data corresponding to the blue component data and the red component data in the first chroma data comprises a chroma prediction block, adding a luma prediction block to the chroma prediction block, and inputting the chroma prediction block and the luma prediction block into a convolutional layer that is of the second stride and that corresponds to the chroma prediction block.

20. The apparatus according to claim 19, wherein the processing module is configured to:
determine, based on the initial chroma subsampling format of the image block, whether to downsample the luma reconstruction block; and
in a case that it is determined that the luma reconstruction block needs to be downsampled, add a downsampled luma reconstruction block to the chroma reconstruction block, and input the downsampled luma reconstruction block and the chroma reconstruction block into the convolutional layer that is of the second stride and that corresponds to the chroma reconstruction block; or
in a case that it is determined that the luma reconstruction block does not need to be downsampled, add the luma reconstruction block to the chroma reconstruction block, and input the luma reconstruction block and the chroma reconstruction block into the convolutional layer that is of the second stride and that corresponds to the chroma reconstruction block.

21. The apparatus according to any one of claims 14 to 20, further comprising:
a sampling module, configured to downsample auxiliary data comprised in the first luma data, wherein
the auxiliary data is component data other than the luma reconstruction block in the first luma data, and a value of a first stride of a convolutional layer corresponding to the auxiliary data is different from a value of a first stride of a convolutional layer corresponding to the luma reconstruction block.

22. An electronic device, comprising a processor and a memory, wherein the memory stores a program or instructions capable of running on the processor, and when the program or the instructions are executed by the processor, the steps of the image block compression processing method according to any one of claims 1 to 13 are implemented.

23. A readable storage medium, wherein the readable storage medium stores a program or instructions, and when the program or the instructions are executed by a processor, the steps of the image block compression processing method according to any one of claims 1 to 13 are implemented.

24. A chip, wherein the chip comprises a processor and a communication interface, the communication interface is coupled to the processor, and the processor is configured to run a program or instructions to implement the steps of the image block compression processing method according to any one of claims 1 to 13.
